# EUROPEAN PATENT APPLICATION

(11) **EP 3 940 619 A1**
(43) Date of publication of application: **19.01.2022**
(21) Application number: 20769590.9
(22) Date of filing: 12.03.2020
(51) Int. Cl.: G06Q 30/02, G06Q 50/10

(54) **DEVICE, PROGRAM, AND SYSTEM FOR PROVIDING POINT SERVICES**

(30) Priority: 13.03.2019 JP 2019045864; 11.09.2019 JP 2019165443
(71) Applicant: Switch Smile Co., Ltd., Koriyama-shi, Fukushima, 963-8023 (JP)
(72) Inventor: MORISHITA, Ryuichi, Suita-shi, Osaka 565-0871 (JP); TAKAFUKU, Toshihiro, Osaka-shi, Osaka 541-0047 (JP); SAKAMOTO, Atsushi, Osaka-shi, Osaka 541-0047 (JP)
(74) Representative: Uexküll & Stolberg
(86) International application number: PCT/JP2020/010856
(87) International publication number: WO 2020/184669

(57) **Abstract**

The device according to the present invention comprises: a means for acquiring first stay duration for which a user has stayed in a first predetermined area of a plurality of predetermined areas; a point calculation means for calculating points to be given to the user based at least on the first stay duration; and a means for giving the calculated points to the user. According to one embodiment, the device according to the present invention further comprises: a means for managing a total of the first stay duration within a predetermined period; and a means for specifying a first point giving rate based at least on the total of the first stay duration within the predetermined period, where the point calculation means calculates the points to be given to the user based at least on the first stay duration and the first point giving rate.

## Description

### [Technical Field]

The present invention relates to a device, a program and a system for providing a point service (e.g., a point service that adds value to time).

### [Background Art]

Point services have long been known in which points are given according to the amount of payment (see, for example, Non-Patent Literature 1). Furthermore, it has been traditionally known to pay a tip as well as pay for food and drink at restaurants (see, for example, Patent Literature 1).

### [Citation List]

### [Patent Literature]

[PTL 1] Japanese National Phase PCT Laid-Open Publication No. 10-502193

### [Non Patent Literature]

[NPL 1] Japan Broadcasting Corporation, "Where is the point service battle going?", [online], [retrieved on March 6, 2019], Internet <URL:https://www3.nhk.or.jp/news/business_tokushu/2018_0528 .html>

### [Summary of Invention]

### [Technical Problem]

In the conventional point services, however, there is no such incentive that can control the behavior of the user (and in particular, the behavior that involves the movement of the user) although such point services may be able to increase the purchasing motivation of the user by giving points according to the amount of payment.

It has been conventionally only possible to add a tip upon payment with a universal electronic transaction card using a POS terminal, and no systems have been created for paying a tip independently of the price for food and drink in the restaurant.

An objective of the present invention is to provide a device, a program and a system for providing a point service capable of controlling the behavior of the user (and in particular, behavior that involves the movement of the user), as well as a device and a program for providing a point service with a tipping function.

### [Solution to Problem]

In one aspect of the present invention, the device according to the present invention is a device for providing a point service that adds value to time, the device comprising: a means for acquiring first stay duration for which a user has stayed in a first predetermined area of a plurality of predetermined areas; a point calculation means for calculating points to be given to the user based at least on the first stay duration; and a means for giving the calculated points to the user.

According to one embodiment of the present invention, the device may further comprise: a means for managing a total of the first stay duration within a predetermined period; and a means for specifying a first point giving rate based at least on the total of the first stay duration within the predetermined period, where the point calculation means may calculate the points to be given to the user based at least on the first stay duration and the first point giving rate.

According to one embodiment of the present invention, the device may further comprise: a means for managing a total of second stay duration for which the user has stayed in each of the plurality of predetermined areas within a predetermined period; and a means for specifying a second point giving rate based at least on a total of the second stay duration within the predetermined period, where the point calculation means may calculate the points to be given to the user based at least on the first stay duration and the second point giving rate.

According to one embodiment of the present invention, the device may further comprise a means for acquiring congestion forecast information indicating a forecast of future congestion in the first predetermined area and/or congestion status information indicating a current congestion status in the first predetermined area, and the point calculation means may calculate the points to be given to the user based at least on the first stay duration and the congestion forecast information and/or the congestion status information.

According to one embodiment of the present invention, the device may further comprise: a means for managing information about a plurality of users and information about a plurality of business operators; a point management means for managing points given to each user so as to invalidate the points given to each user that have passed a predetermined expiration date when the points pass the predetermined expiration date; and a redistribution means for executing processing for redistributing the invalidated points to a particular user among the plurality of users or a particular business operator among the plurality of business operators.

According to one embodiment of the present invention, the device may further comprise a means for managing a predetermined virtual currency owned by the plurality of users and/or the plurality of business operators, and the redistribution means may execute processing for redistributing at least some of the invalidated points to a particular user among the plurality of users, based at least on the amount of a predetermined virtual currency owned by each of the plurality of users, and/or may execute processing for redistributing at least some of the invalidated points to a particular business operator among the plurality of business operators, based at least on the amount of a predetermined virtual currency owned by each of the plurality of business operators.

According to one embodiment of the present invention, the device may further comprise a means for managing a total of the first stay duration within a predetermined period, and the redistribution means may execute processing for redistributing at least some of the invalidated points to the user based at least on the total of the first stay duration within the predetermined period.

According to one embodiment of the present invention, the device may further comprise a means for managing a total of second stay duration for which the user has stayed in the plurality of predetermined areas within a predetermined period, and the redistribution means may execute processing for redistributing at least some of the invalidated points to the user based at least on the total of the second stay duration within the predetermined period.

According to one embodiment of the present invention, the device may further comprise a means of managing the frequency of use of points by the user, and the redistribution means may execute processing for redistributing at least some of the invalidated points to the user based further on the frequency of use of the points by the user.

According to one embodiment of the present invention, the device may further comprise: a means for managing the points given to the user as to which predetermined area of the plurality of predetermined areas the user has stayed to cause the points to be given to the user; and a point usage means for executing processing for using the points given to the user in any of the plurality of predetermined areas, where the point usage means may process the points given to the user as points of higher value, when the points given to the user are such points that have been given to the user due to the user having stayed in the first predetermined area among the plurality of predetermined areas and when the user uses the points in the first predetermined area, compared to when the user uses the points in any area other than the first predetermined area.

According to one embodiment of the present invention, the device may further comprise a means for acquiring user location information indicating a location of the user, and the point calculation means may calculate points to be given to the user based further on the user location information.

According to one embodiment of the present invention, the device may further comprise: a means for acquiring the user location information indicating the location of the user; a means for acquiring user settlement information related to settlement of the user; and a means for analyzing behavior of the user based at least on the user location information and the user settlement information.

According to one embodiment of the present invention, the device may determine whether the first stay duration exceeds a predetermined threshold value, and when the first stay duration exceeds the predetermined threshold value, may execute processing for stopping giving points to the user or processing for disabling the user from using points.

According to one embodiment of the present invention, the device may further comprise: a means for managing the number of points owned by the user; a means for specifying a service provider that has provided a service for the user; and a first donation means for donating at least some of the points owned by the user to the service provider.

According to one embodiment of the present invention, the device may further comprise: a means for specifying a business operator that manages the service provider; and a second donation means for donating at least some of the points owned by the user to the business operator, where the points donated to the service provider and/or the business operator may be donated according to a predetermined rule that regulates the distribution of points to service providers and business operators.

According to one embodiment of the present invention, the device may further comprise: a means for determining whether the number of points owned by the user is less than the number of points to be donated to the service provider; and a means for making a reservation for donating points to the service provider when the number of points owned by the user is less than the number of points to be donated to the service provider, so that the points to be donated to the service provider can be donated to the service provider at the time when remaining points, required for the number of points owned by the user to exceed the number of points to be donated to the service provider, are accumulated.

According to one embodiment of the present invention, the device may further comprise: a means for calculating the time required to accumulate the remaining points; and a means for notifying the user of the time required to accumulate the remaining points.

According to one embodiment of the present invention, the device may further comprise: a means for determining whether the user has stayed in the first predetermined area for the time required to accumulate the remaining points, and when the user is determined to have stayed in the first predetermined area for the time required to accumulate the remaining points, the first donation means may donate the points to be donated to the service provider, including the remaining points, to the service provider in accordance with the reservation for donating points to the service provider.

According to one embodiment of the present invention, the device may further comprise: a means for receiving a search condition entered by the user; a means for specifying at least one service provider that satisfies the search condition; a means for presenting one or more service providers of the specified at least one service provider to the user as a search result; a means for receiving an entry indicating one service provider selected from the presented one or more service providers; and a means for permitting communication between the selected one service provider and the user.

According to one embodiment of the present invention, the device may further comprise a means for donating at least some of the points owned by the user to the selected one service provider.

According to one embodiment of the present invention, the donating of at least some of the points owned by the user to the selected one service provider may be allowed to be executed while the selected service provider and the user are in a call.

According to one embodiment of the present invention, the device may further comprise: a calculation means for calculating the points to be given to the selected one service provider, based at least on call duration between the selected one service provider and the user; and a means for giving the points to be given to the selected one service provider to the selected one service provider.

According to one embodiment of the present invention, the calculation means may calculate the points to be given to the selected one service provider, based on the call duration between the selected one service provider and the user, and the rank of the selected one service provider.

In one aspect of the present invention, the program according to the present invention is a program executed on a device that adds value to time, the device comprising a processor section, where the program, when executed by the processor section, may cause the processor section to execute at least: acquiring first stay duration for which a user has stayed in a first predetermined area of a plurality of predetermined areas; calculating points to be given to the user based at least on the first stay duration; and giving the calculated points to the user.

In one aspect of the present invention, the system according to the present invention is a system for providing a point service that adds value to time, the system comprising: at least one terminal device; and a device for providing a point service that adds value to time, where the at least one terminal device may comprise: a means for specifying information about first stay duration for which a user has stayed in a first predetermined area of a plurality of predetermined areas; and a means for transmitting the information about first stay duration to the device, and where the device may comprise: a means for receiving the information about first stay duration from the at least one terminal device; a means for acquiring the first stay duration from the information about first stay duration; a means for calculating points to be given to the user based at least on the first stay duration; and a means for giving the calculated points to the user.

In one aspect of the present invention, the device according to the present invention is a device for providing a point service, the device comprising: a means for managing the number of points owned by a user; a means for specifying a service provider that has provided a service for the user; and a first donation means for donating at least some of the points owned by the user to the service provider.

According to one embodiment of the present invention, the device may further comprise: a means for specifying a business operator that manages the service provider; and a second donation means for donating at least some of the points owned by the user to the business operator, where the points donated to the service provider and/or the business operator may be donated according to a predetermined rule that regulates the distribution of points to service providers and business operators.

According to one embodiment of the present invention, the device may further comprise: a means for determining whether the number of points owned by the user is less than the number of points to be donated to the service provider; and a means for making a reservation for donating points to the service provider when the number of points owned by the user is less than the number of points to be donated to the service provider, so that the points to be donated to the service provider can be donated to the service provider at the time when remaining points, required for the number of points owned by the user to exceed the number of points to be donated to the service provider, are accumulated.

According to one embodiment of the present invention, the points given to the user may be given according to stay duration in a first predetermined area of a plurality of predetermined areas, and the device may further comprise: a means for calculating the time required to accumulate the remaining points; and a means for notifying the user of the time required to accumulate the remaining points.

According to one embodiment of the present invention, the device may further comprise: a means for determining whether the user has stayed in the first predetermined area for the time required to accumulate the remaining points, and when the user is determined to have stayed in the first predetermined area for the time required to accumulate the remaining points, the first donation means may donate the points to be donated to the service provider, including the remaining points, to the service provider in accordance with the reservation for donating points to the service provider.

In one aspect of the present invention, the program according to the present invention is a program executed on a device for providing a point service, the device comprising a processor section, where the program, when executed by the processor section, may cause the processor section to execute at least: managing the number of points owned by a user; specifying a service provider that has provided a service for the user; and donating at least some of the points owned by the user to the service provider

In one aspect of the present invention, the system according to the present invention is a system for providing a point service, the system comprises: at least one user device operated by a user; and a device for providing a point service, where the user device may comprise: a means for acquiring information for identifying a service provider that has provided a service for the user; and a means for providing the information for identifying the service provider for the device, and where the device may comprise: a means for managing the number of points owned by the user; a means for specifying the service provider based on the information for identifying the service provider; and a first donation means for donating at least some of the points owned by the user to the service provider.

In one aspect of the present invention, the device according to the present invention is a device for providing a point service, the device comprising: a means for receiving a search condition entered by a user; a means for specifying at least one service provider that satisfies the search condition; a presentation means for presenting one or more service providers of the specified at least one service provider to the user as a search result; a means for receiving an entry indicating one service provider selected from the presented one or more service providers; and a means for permitting communication between the selected one service provider and the user.

According to one embodiment of the present invention, the device may further comprise a means for donating at least some of the points owned by the user to the selected one service provider.

According to one embodiment of the present invention, the donating of at least some of the points owned by the user to the selected one service provider may be allowed to be executed while the selected service provider and the user are in a call.

According to one embodiment of the present invention, the device may further comprise: a calculation means for calculating the points to be given to the selected one service provider, based at least on call duration between the selected one service provider and the user; and a means for giving the points to be given to the selected one service provider to the selected one service provider.

According to one embodiment of the present invention, the calculation means may calculate the points to be given to the selected one service provider, based on the call duration between the selected one service provider and the user, and the rank of the selected one service provider.

According to one embodiment of the present invention, the presentation means may present the one or more service providers set to be allowed to respond to a communication request from a user device, among the specified at least one service provider, to the user as a search result.

In one aspect of the present invention, the program according to the present invention is a program executed on a device for providing a point service, the device comprising a processor section, where the program, when executed by the processor section, may cause the processor section to execute at least: receiving a search condition entered by a user; specifying at least one service provider that satisfies the search condition; presenting one or more service providers of the specified at least one service provider to the user as a search result; receiving an entry indicating one service provider selected from the presented one or more service providers; and permitting communication between the selected one service provider and the user.

In one aspect of the present invention, the system according to the present invention is a system for providing a point service, the system comprises: at least one user device operated by a user; and a device for providing a point service, where the user device may comprises: a means for acquiring a search condition entered by the user; and a means for transmitting the search condition to the device, where the device may comprise: a means for receiving the search condition; a means for specifying at least one service provider that satisfies the search condition; and a presentation means for presenting one or more service providers of the specified at least one service provider to the user as a search result, where the user device may comprise a means for receiving and transmitting an entry indicating one service provider selected from the presented one or more service providers, where the device may comprise: a means for receiving an entry indicating one service provider selected from the presented one or more service providers; and a means for permitting communication between the selected one service provider and the user.

According to one embodiment of the present invention, the device may further comprise a means for donating at least some of the points owned by the user to the selected one service provider.

According to one embodiment of the present invention, the donating of at least some of the points owned by the user to the selected one service provider may be allowed to be executed while the selected service provider and the user are in a call.

According to one embodiment of the present invention, the device may further comprise: a calculation means for calculating the points to be given to the selected one service provider, based at least on call duration between the selected one service provider and the user; and a means for giving the points to be given to the selected one service provider to the selected one service provider.

According to one embodiment of the present invention, the calculation means may calculate the points to be given to the selected one service provider, based on the call duration between the selected one service provider and the user, and the rank of the selected one service provider.

According to one embodiment of the present invention, the system may further comprise a service provider device operated by a service provider, where the service provider device may comprise a means for transmitting a first setting, in which a response is allowed to a communication request from a user device, and a second setting, in which a response is not allowed to a communication request from a user device, to the device, and where the presentation means may present the one or more service providers set to be allowed to respond to a communication request from a user device, among the specified at least one service provider, to the user as a search result.

According to one embodiment of the present invention, the service provider device may further comprise a means for transmitting a third setting, which conceals that a response is allowed to a communication request from a user device, to the device.

### [Advantageous Effects of Invention]

The present invention can accordingly provide a device, a program and a system for providing a point service capable of controlling the behavior of the user (and in particular, behavior that involves the movement of the user), and a device and a program for providing a point service with a tipping function.

### [Brief Description of Drawings]

[Figure 1] Figure **1** is a diagram showing an example of a new point service that adds value to time.
[Figure 2] Figure **2** is a schematic diagram of a business model with the use of a new point service to add value to time.
[Figure 3] Figure **3** is a diagram showing an example of a configuration of a system for achieving a new point service that adds value to time.
[Figure **4a]** Figure **4A** is a diagram showing an example of the structure of information stored on the user database section **341.**
[Figure **4b]** Figure **4B** is a diagram showing an example of the structure of information stored on a business operator database section **342.**
[Figure 4C] Figure **4C** is a diagram showing an example of the structure of information stored on the point database section **343.**
[Figure **4D]** Figure **4D** is a diagram showing an example of the structure of information stored on the rate database section **344.**
[Figure 5] Figure **5** is a diagram showing an example of the flow of processing executed in the computer system **300.**
[Figure 6] Figure **6** is a chart showing an example of the flow of processing executed in the server device **310.**
[Figure 7] Figure **7** is a chart showing another example of the flow of processing executed in the server device **310.**
[Figure 8A] Figure **8A** is a diagram showing an example of the screen **810** for displaying a main menu.
[Figure 8B] Figure **8B** is a diagram showing an example of a screen 820 for using points.
[Figure 8C] Figure **8C** is a diagram showing an example of a screen **830** for specifying the service provider **B,** who has provided service for the user **A.**
[Figure 8D] Figure **8D** is a diagram showing an example of a screen **840** for displaying information about the service provider B that has provided the service for the user **A.**
[Figure 8E] Figure **8E** is a diagram showing an example of a screen **850** for displaying a list of candidates for point donation, including the service provider **B.**
[Figure **8F]** Figure **8F** is a diagram showing an example of a screen **860** for showing that point donation is completed.
[Figure **8G]** Figure **8G** is a diagram showing an example of a screen **870** for warning of insufficient points.
[Figure 8H] Figure **8H** is a diagram showing an example of a screen **880** indicating that points have been donated.
[Figure 9] Figure **9** is a diagram showing an example of a configuration of the system for achieving a point service with a tipping function.
[Figure 10] Figure **10** is a functional block diagram showing the main parts of the function for the processor section **12** of the user device **2** to function by the user program **13a** and the function for the processor section 22 of the server device **9** to function by the management program **23a.**
[Figure 11] Figure **11** is a chart showing an example of the flow of processing executed on the server device **9.**
[Figure **12A]** Figure **12A** is a diagram showing an example of a screen **1210** for searching for a cast (i.e., the service provider) .
[Figure **12B]** Figure **12B** is a diagram showing an example of a screen **1220** for displaying detailed information about the cast selected by the user among the casts satisfying the search conditions.
[Figure **12C]** Figure **12C** is a diagram showing an example of a screen **1230** during a call with a cast.
[Figure 13] Figure **13** is a diagram showing an example of other configurations of the system to achieve the cast matching service.
[Figure 14] Figure **14** is a functional block diagram showing the main parts of the function of the processor section **1311** of the store device **1310** to work with the store device program **1315a,** the function of the processor section **1321** of the cast device **1320** to work with the cast device program **1325a,** the function of the processor section **1331** of the user device **1330** to work with the user device program **1335a,** and the function of the processor section **1341** of the server device **1340** to work with the server device program **1345a.**
[Figure 15] Figure **15** is a chart showing an example of the flow of processing executed on the server device **1340.**
[Figure 16] Figure **16** is a diagram showing an example of installing at least one terminal device in a predetermined area.

### [Description of Embodiments]

### 1. New Point Service that Adds Value to Time

The Applicant proposes a new point service that adds value to time by giving points according to time. This is intended to allow controlling of the points to be given to a user according to the stay duration for which the user has stayed in a predetermined area, thereby attracting the user into a predetermined area or causing the user to exit the predetermined area, and in turn to allow controlling of the behavior of the user (and in particular, the behavior that involves the movement of the user).

Hereinafter, embodiments of the present invention will be described with reference to the drawings.

### 1.1 An Example of a New Point Service that Adds Value to Time

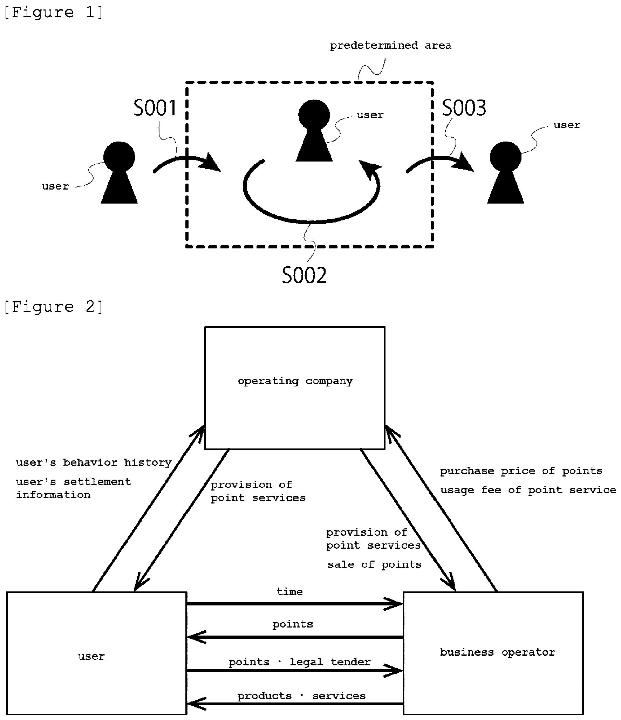

Figure **1** shows an example of a new point service that adds value to time. It is assumed that the user device possessed by the user shown in Figure **1** is pre-installed with a predetermined application program for using the new point service. The steps shown in Figure **1** will be described hereinafter.

Step S001: A user enters a predetermined area. Upon the user entering the predetermined area, the user's stay in the predetermined area is started. The entry of the user into the predetermined area (i.e., the start of the user's stay in the predetermined area) where an entrance, for example, is located in the predetermined area, can be detected by a terminal device (e.g., a beacon) located near the entrance. Such a beacon, in response to the user possessing a user device with a predetermined application pre-installed therein approaching the beacon for example, is configured to transmit a signal, including the identifier of the user and the time at which the user approaches the beacon, to a server device. In this way, the server device is able to find out remotely who the user that has entered the predetermined area is and when the user entered the predetermined area (i.e., the time of entry of the user into the predetermined area).

Step S002: The user stays in the predetermined area. The new point service is designed so that the number of points given to a user while the user is staying in a predetermined area increases continuously or discontinuously (e.g., stepwisely) according to the stay duration. While the point giving rate (the number of points given per unit time) may be constant regardless of the stay duration, the point giving rate (the number of points given per unit time) may also be increased or decreased according to the stay duration. In addition, an upper limit may be set on the number of points given to the user while the user is staying in a predetermined area. The user is allowed to take on any behavior in the predetermined area. For example, the user may take a tour in the predetermined area along the course desired by the user. The course along which the user took a tour in the predetermined area can be detected, for example, by one or more terminal devices (e.g., one or more beacons) located in the predetermined area.

Step S003: The user exits the predetermined area. Upon the user exiting the predetermined area, the user's stay in the predetermined area is terminated. The exiting of the user from the predetermined area (i.e., the termination of the user's stay in the predetermined area) where an exit, for example, is located in the predetermined area, can be detected by a terminal device (e.g., a beacon) located near the exit. Such a beacon, in response to the user possessing a user device with a predetermined application pre-installed therein approaching the beacon for example, is configured to transmit a signal, including the identifier of the user and the time at which the user was approaching the beacon, to a server device. In this way, the server device is able to find out remotely who the user that has left the predetermined area is and when the user left the predetermined area (i.e., the time of exiting of the user from the predetermined area).

After the user exits the predetermined area, the stay duration for which the user has stayed in the predetermined area is calculated. Such calculation of stay duration is executed by, for example, a server device. The server device can calculate the stay duration for which the user has stayed in the predetermined area based on, for example, the time of entry of the user into the predetermined area and the time of exit of the user from the predetermined area. The points to be given to the user are calculated according to the stay duration calculated in such a manner. Calculation of such points is executed by, for example, the server device. The points calculated by the server device are given to the user via, for example, the application program installed on the user device.

Thus, the new point service can accordingly allow controlling of the points to be given to the user according to the stay duration for which the user has stayed in the predetermined area, thereby attracting the user into a predetermined area or causing the user to exit the predetermined area. This also allows controlling of the movement of the user.

The predetermined area may be any area. Examples of the predetermined area include, but are not limited to, an area managed by one store (member store), an area managed by a commercial facility including multiple stores (member stores), an area managed by an amusement park, and an area of an Expo site.

Figure **2** is a schematic diagram of a business model with the use of a new point service to add value to time. Figure **2** shows an operating company that operates and manages a new point service, a business operator (e.g., a member store) that has introduced the new point service therein, and a user using the new point service.

According to the embodiment shown in Figure **2****,** the operating company provides the new point service for the business operator (e.g., a member store) and sells points to the business operator, while the business operator pays the operating company the price for purchasing the points and/or the usage fee for using the new point service. The operating company provides the user with the new point service, while the user provides the user's behavior history and/or settlement information to the operating company. By staying in the predetermined area managed by the business operator, the user provides the business operator with the time referred to as stay duration, for which the user has stayed in the predetermined area, while the business operator gives points to the user according to the stay duration for which the user has stayed in the predetermined area. Further, the user provides points and/or a legal tender to the business operator, while the business operator provides a product or service to the user.

Thus, the operating company can acquire the purchase price of the points and/or the usage fee of the new point service from the business operator, and can also acquire the behavior history of the user and/or the settlement information of the user from the user; the business operator can use the new point service to increase the frequency of use by the users and thus increase sales; and the user can acquire points according to their stay duration simply by staying in the predetermined area managed by the business operator, and the user can receive a product or service from the business operator by using the points acquired in such a manner. Therefore, this new point service can benefit these three parties.

### 1.2 Configuration of the System for Achieving the New Point Service that Adds Value to Time

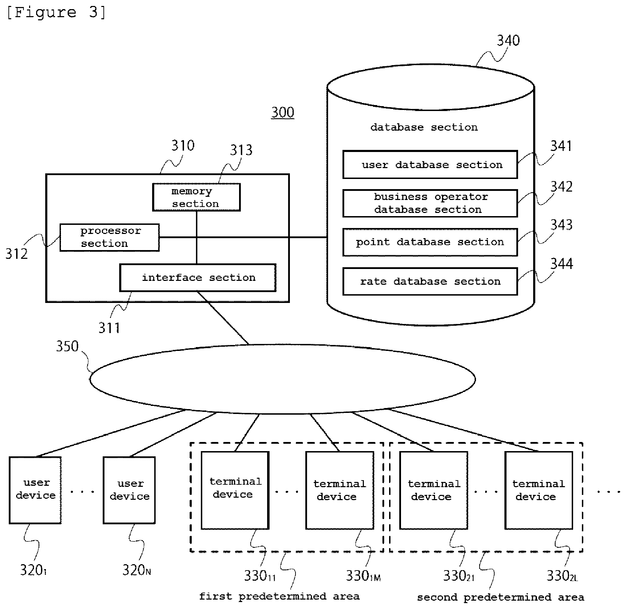

Figure 3 shows an example of a configuration of a system for achieving a new point service that adds value to time.

According to the embodiment shown in Figure **3****,** a computer system **300** comprises a server device **310,** at least one user device **320₁-320_{N}** used by at least one user, at least one terminal device (a first group of one or more terminal devices **330₁₁-330_{1M}** located in the first predetermined area, and a second group of one or more terminal devices **330₂₁-330_{2L}** located in the second predetermined area, in the embodiment shown in Figure **3****),** and a database section **340.** According to the embodiment shown in Figure **3****,** the server device **310** is configured to be capable of communicating, via an Internet **350,** with at least one user device **320₁-320_{N},** one or more terminal devices **330₁₁-330_{1M}** in the first group, and one or more terminal devices **330₂₁-330_{2L}** in the second group. Note that L, M, and N herein is any integer greater than or equal to 1.

The computer system **300** may comprise at least one management device (not shown) for managing a predetermined area in each of such predetermined areas. At least one management device may be operated, for example, by the business operator of that predetermined area. The server device **310** is configured to be capable of communicating with at least one management device via the Internet **350.**

The server device **310** is a device for providing a new point service that adds value to time. The server device **310** is an information processing device operated and managed by a company (or its manager or administrator) that provides a new point service that adds value to time. The server device **310** is, for example, a workstation or a personal computer, and has a general hardware configuration as a server. According to the embodiment shown in Figure **3****,** the server device **310** has an interface section **311,** a processor section **312** including one or more CPUs (Central Processing Units) and a memory section **313.** The server device **310** may have any hardware configuration, without any particular limitation thereto, that is capable of achieving the functions thereof, where the server device may be configured with a single machine or with multiple machines combined.

The interface section **311** controls communication between at least one terminal device and at least one user device **320₁-320_{N}.**

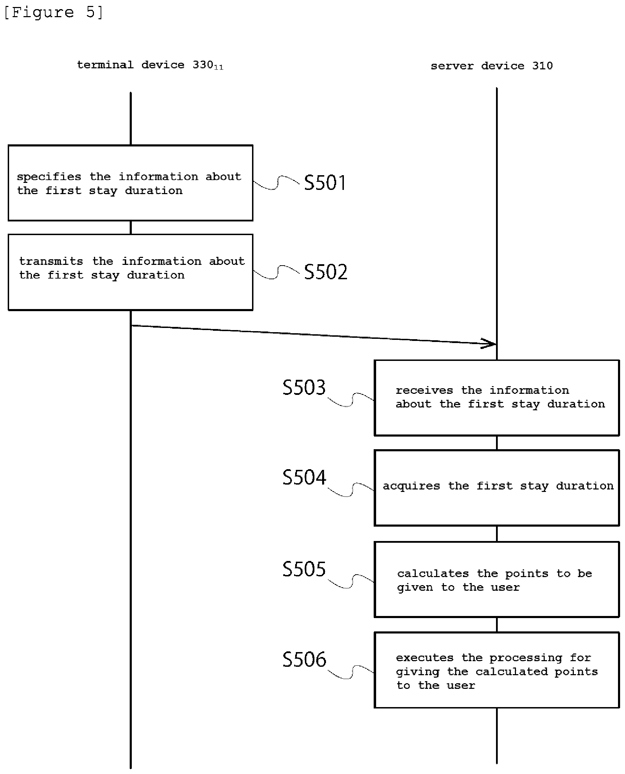

The memory section **313** includes a program required to execute processing, data required to execute the program, and the like, stored thereon. The memory section **313** includes, for example, a program for executing the processing shown in Figures **5-7** stored thereon. Herein, any approaches may be taken to store the program on the memory section **313.** For example, the program may be pre-installed in the memory section **313.** Alternatively, the program may be installed in the memory section **313** by being downloaded via a network, such as the Internet **350,** or the program may be installed in the memory section **313** via a storage medium, such as an optical disc or a USB.

The processor section **312** controls the work of the entire server device **310.** The processor section **312** reads the program stored on the memory section **313** and executes the program. This allows the server device **310** to function as a device for executing a desired step.

The server device **310** is connected with the database section **340.** The database section **340** at least comprises a user database section **341,** an area management database section **342,** a point database section **343,** and a rate database section **344.**

Each of the at least one user device **320₁-320_{N}** is configured to be capable of communicating with the server device **310** via the Internet **350.** For example, each at least one user device **320₁-320_{N}** may be a mobile wireless terminal, such as a mobile phone, a smart phone, a tablet terminal, smart glasses or a smart watch terminal, or a personal computer, such as a desktop PC, a laptop PC or a notebook PC.

Each at least one terminal device is configured to be capable of communicating with the server device **310** via the Internet **350.** At least some of the at-least-one terminal device(s) may be, for example, detection devices for detecting a user. An example of the devices for detecting a user may be, but is not limited to, a beacon device configured to transmit a predetermined beacon signal within a predetermined range.

The beacon is configured to periodically transmit beacon signals within a predetermined range. Because of this, when a user device, in which the application program for using the new point service according to the present invention is pre-installed, receives the beacon signal, the user device transmits information (user ID) for identifying the user who possesses the user device to the beacon, while the beacon transmits the received user ID and a preregistered beacon ID thereof to the server device **310.** This allows the server device **310** to identify the user and the beacon that were in the close vicinity with each other.

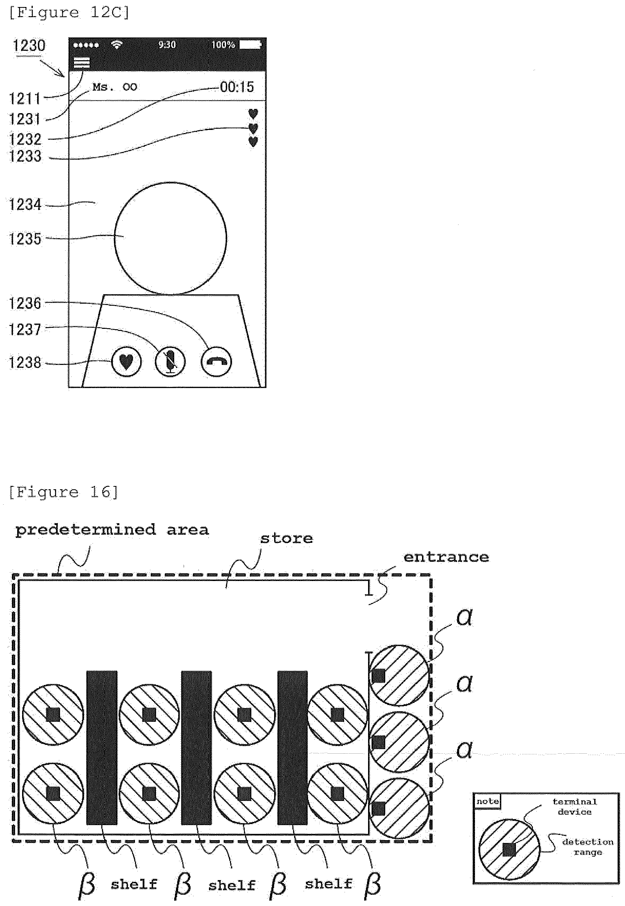

Figure **16** shows an example of installing at least one terminal device in a predetermined area. In this example, the predetermined area is an area managed by one store. The predetermined area includes an area inside the store and an area outside the store. The area inside the store is, for example, an area where the store provides the store's products and services for the user (customer). The area outside the store is, for example, an area where the user (customer) waits for entry before entering the store. In order to give points to the user staying in the area outside the store, a terminal device (e.g., a beacon) is installed, the terminal device having a detection range ***α*** for detecting a user staying in an area outside the store (such as a user waiting to enter the store). In addition, in order to give points to the user staying in the area inside the store, a terminal device (e.g., a beacon) is installed, the terminal device having a detection range **β** for detecting a user that has entered the store. Accordingly, the disposition of the terminal device having a detection range ***α*** outside the store (e.g., the outer side of the store entrance) allows the user, waiting to enter the store, to acquire points simply by waiting in front of the store. In addition, the disposition of the terminal device having a detection range **β** inside the store allows grasping of the user's behavior in the store (e.g., the length of time the user stayed in the store, the route the user traveled through the store, and the zone in the store where the user stayed the longest) and even allows giving of points to the user based on the stay duration in the predetermined area calculated by adding up the stay duration spent in front of the store and the stay duration spent in the store.

According to the embodiment shown in Figure **3****,** the present invention has been described such that at least one user device **320₁-320_{N},** at least one terminal device, and at least one management device are capable of communicating with the server device **310** via the Internet **350;** however, the present invention is not limited thereto. It is also possible to use any type of network instead of the Internet 350.

Furthermore, according to the embodiment shown in Figure **3****,** the database section **340** is provided externally of the server device **310,** and any modes may be applied thereto. For example, the database section **340** may be configured as a single external hard disk device of the server device **310,** or may be configured as a storage on the cloud connected via a network. Alternatively, it is also possible to provide the database section **340** inside the server device **310.** The configuration of the database section **340** is not limited to any particular hardware configuration. For example, the database section **340** may be configured with a single hardware part or multiple hardware parts. Furthermore, the configuration of each database section included in the database section **340** is not limited to any particular hardware configuration either. For example, each database section included in the database section **340** may also be configured with a single hardware part or multiple hardware parts.

Furthermore, according to the embodiment shown in Figure **3****,** the present invention has been described with an example where there are two predetermined areas (i.e., the first predetermined area and the second predetermined area); however, the present invention is not limited thereto. The number of predetermined areas is any integer greater than or equal to 1.

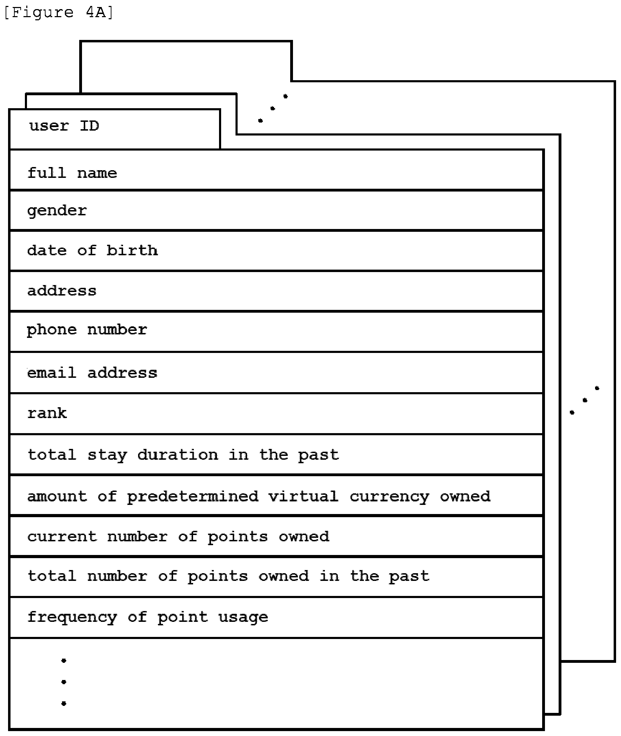

Figure **4a** shows an example of the structure of information stored on the user database section **341.**

The user database section **341** includes information about users stored thereon. The information about a user can be identified by the information for identifying the user (user ID). The user database section **341** further includes, stored thereon, user's full name, gender, date of birth, address, phone number, email address, rank, total stay duration in the past (e.g., total stay duration in the past for each predetermined area, total stay duration in the past in all the predetermined areas, total stay duration in the past for each predetermined area within a predetermined period, and total stay duration in the past in all the predetermined areas within a predetermined period), the amount of predetermined virtual currency owned, the current number of points owned, the total number of points owned in the past, the frequency of point usage (e.g., the frequency of point usage within a predetermined period, and the total of frequency of point usage in the past), and the like.

As used herein, the predetermined period is any period. Examples of the predetermined period include, but are not limited to, the whole period up to now, within a year, within the last month, within the last week, during the last year, during the last month, and between month A of the year B and the month C of the year D.

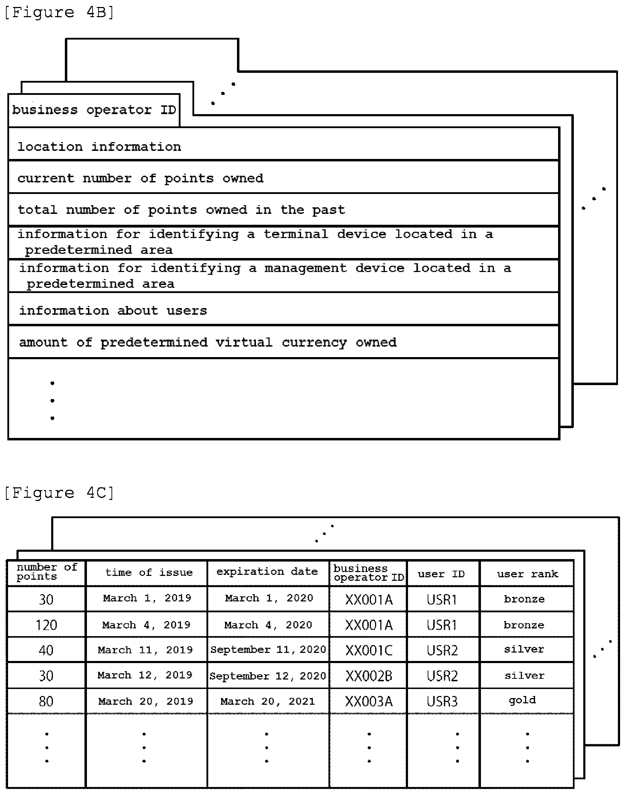

Figure **4B** shows an example of the structure of information stored on a business operator database section **342.**

The business operator database section **342** includes, stored thereon, information about business operators that manage predetermined areas. The information about a business operator can be identified by the information for identifying the business operator (business operator ID). The business operator database section **342** further includes, stored thereon, location information about the predetermined area managed by the business operator (e.g., latitude and longitude), the current number of points owned, the total number of points owned in the past, information for identifying a terminal device located in a predetermined area managed by the business operator, information for identifying a management device located in a predetermined area managed by the business operator, information about users (e.g., the total of stay duration of all users in an area per unit time (e.g., one week), the total number of users in an area per unit time, and the stay duration of the user who stayed the longest in an area within a predetermined period), the amount of predetermined virtual currency owned, and the like.

Figure **4C** shows an example of the structure of information stored on the point database section **343.**

The point database section **343** includes, stored thereon, information about points. According to the embodiment shown in Figure **4C****,** the information about points is associated with the number of points, time of issue of points, expiration date of points, business operator ID of the business operator that has issued or given the points, user ID of the user who was given the points, and rank of the user who was given the points; however, the present invention is not limited thereto. According to the embodiment shown in Figure **4C****,** the following, for example, is understood: the number of points, "30", were issued or given to a user identified by the user ID "USR1" (user rank: "bronze") by a business operator identified by the business operator ID "XX001A" on March 1, 2019, where the expiration date for the number of points "30" is March 4, 2020.

The length of the period during which the points are valid may vary, for example, according to the rank of the user (for example, the length of the period of the "silver" user rank is longer than that of the "bronze" user rank, and the length of the period of the "gold" user rank is longer than that of the "silver" user rank), according to each business operator ID that has issued or given the points, or according to how many points to be issued or given (for example, the length of the period during which the points are valid may be longer as the number of points issued or given increases).

While the three ranks, "bronze", "silver" and "gold", have been described according to the embodiment shown in Figure **4C****,** the present invention is not limited thereto. Any criteria for ranking and any number of ranks may be used. For example, the ranking may be executed with the number of area visits used as the standard, or with the total stay duration in the area used as the standard. Furthermore, the number of ranks is any number greater than or equal to 1.

When the expiration date of the points passes and the points thus become invalid, at least part of the point database section **343** may be updated so as to accomplish the processing for invalidating the points that have passed the expiration date. Updating at least part of the point database section **343** includes, but is not limited to, labeling the points that have passed the expiration date with an "invalid" label or updating the status field (not shown) of the points that have passed the expiration date to "invalid", for example.

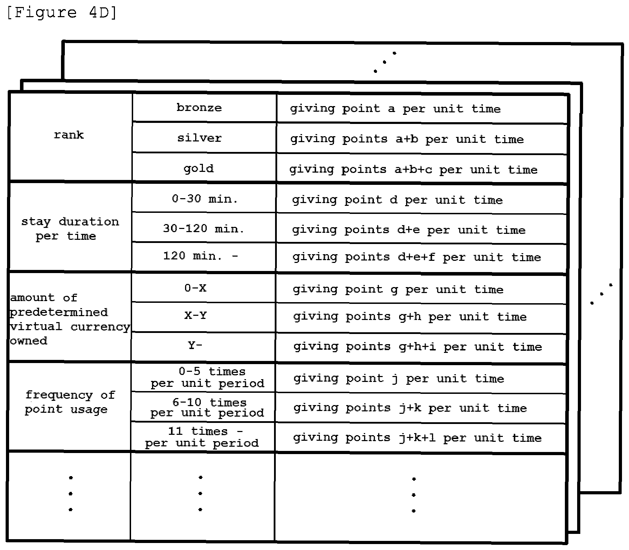

Figure **4D** shows an example of the structure of information stored on the rate database section **344.** Note, in Figure **4D****,** that a, b, c, d, e, f, g, h, i, j, k, 1, X, and Y are positive numbers, respectively, and X < Y.

The rate database section **344** includes, stored thereon, information about the giving rate of the points. According to the embodiment shown in Figure **4D****,** the information about the giving rate of the points is categorized by the user's rank, the stay duration in the area per time, the amount of predetermined virtual currency owned by the user, the frequency of point usage, and the like. For example, if the amount of predetermined virtual currency owned by the user is "0-X", the point g is given per unit time; if the amount of predetermined virtual currency owned by the user is "X-Y", the points g+h are given per unit time; and if the amount of predetermined virtual currency owned by the user is "Y-", the points g+h+i are given per unit time. The unit time is, but is not limited to, 5 minutes, 10 minutes, 30 minutes, and 1 hour, for example. Furthermore, the unit time is, but is not limited to, 1 week, 2 weeks, 1 month, 6 months, and 1 year.

The rate database section **344** includes, stored thereon, a point giving rate that corresponds to the total stay duration within a predetermined period as well as a point giving rate that corresponds to the stay duration per time.

While an example in which each of the rank, the stay duration per time, the amount of predetermined virtual currency owned, the frequency of point usage, and the stay duration within a predetermined period is divided into three categories has been described according to the embodiment shown in Figure **4D****,** the present invention is not limited thereto. The number of categories for each of the rank, the stay duration per time, the amount of predetermined virtual currency owned, the frequency of point usage, and the stay duration within a predetermined period may be one, two, or four or more.

Note that each of the point giving rates shown in Figure **4D** is merely an example. For example, according to the embodiment shown in Figure **4D****,** the point giving rate for the stay duration per time is higher as the stay duration per time is longer; however, the present invention is not limited thereto. The point giving rate for the stay duration per time may be lower as the stay duration per time is longer.

### 1.3 Computer System Processing

Figure **5** shows an example of the flow of processing executed in the computer system **300.** Note that, according to the embodiment shown in Figure 5, the terminal device **330₁₁** will be described as an example of one of the one or more terminal devices in the first group. Furthermore, Steps S501-S502 in Figure 5 are the processing executed by the processor section (not shown) of the terminal device **330₁₁,** while Steps S503-S506 in Figure 5 are the processing executed by the processor section **312** of the server device **310.** Hereinafter, each step shown in Figure **5** will be described.

Step S501: The terminal device **330₁₁** specifies the information about the first stay duration for which the user has stayed in the first predetermined area. For example, when the terminal device **330₁₁** is configured to be capable of detecting the entry of the user into the first predetermined area and the exit of the user from the first predetermined area, the terminal device **330₁₁** may detect the entry of the user into the first predetermined area and the exit of the user from the first predetermined area to specify the information indicating that the user has entered the first predetermined area as well as the information indicating that the user has exited the first predetermined area as the information about the first stay duration. Alternatively, when the terminal device **330₁₁** is configured to be capable of detecting the entry of the user into the first predetermined area and the exit of the user from the first predetermined area, the terminal device **330₁₁** may detect the entry of the user into the first predetermined area and record the time when the entry of the user into the first predetermined area is detected as the stay start time, and may detect the exit of the user from the first predetermined area and record the time when the exit of the user from the first predetermined area is detected as the stay end time, to specify the information indicating the stay start time and the information indicating the stay end time as the information about the first stay duration. Alternatively, the terminal device **330₁₁** may calculate the first stay duration for which the user has stayed in the first predetermined area based on the stay start time and stay end time to specify the information indicating the first stay duration for which the user has stayed in the first predetermined area as the information about the first stay duration.

Each time the terminal device **330₁₁** detects the entry and exit of the user, the terminal device **330₁₁** may receive information for identifying the user who has entered or exited, for example, from a user device possessed by the user via an application program pre-installed in the user device. The terminal device **330₁₁** transmits the received information for identifying the user to the server device **310,** which allows the server device **310** to specify the user to which points are to be given.

Step S502: The terminal device **330₁₁** transmits the information about the first stay duration to the server device **310.** The transmission of the information about the first stay duration is executed via, for example, the Internet **350.**

Step S503: The server device **310** receives the information about the first stay duration from the terminal device **330₁₁.**

Step S504: The server device **310** acquires the first stay duration from the information about the first stay duration. For example, when the information about the first stay duration received in Step S503 is the information indicating that the user has entered the first predetermined area and the information indicating that the user has exited the first predetermined area, the server device **310** can acquire the first stay duration by recording the time when it receives the information indicating that the user has entered the first predetermined area as the stay start time, recording the time when it receives the information indicating that the user has exited the first predetermined area as the stay end time, and calculating the first stay duration for which the user has stayed in the first predetermined area based on the stay start time and stay end time (i.e., the first stay duration = the stay end time - the stay start time). Alternatively, when the information about the first stay duration received in Step S503 is the information indicating the first stay duration for which the user has stayed in the first predetermined area, the server device **310** can acquire the first stay duration by receiving the information about the first stay duration. Alternatively, when the information about the first stay duration received in Step S503 is the information indicating the stay start time and the information indicating the stay end time, the server device **310** can acquire the first stay duration by calculating the first stay duration for which the user has stayed in the first predetermined area based on the stay start time and the stay end time.

In Step S504, an example has been described in which the server device **310** acquires the first stay duration from the information about the first stay duration via Steps S501, S502 and S503 shown in Figure **5****;** however, the present invention is not limited thereto. For example, the server device **310** may acquire the first stay duration (i.e., the first stay duration for which the user has stayed in the first predetermined area) without undergoing Steps S501, S502 and S503 shown in Figure **5****.** Regardless of the type of the steps to undergo to acquire the first stay duration, it is within the scope of the present invention to acquire the first stay duration in any modes as long as the server device **310** can acquire the first stay duration.

Step S505: The server device **310** calculates the points to be given to the user, at least based on the first stay duration acquired in Step S504. For example, the server device **310** calculates the points to be given to the user based on the first stay duration acquired in Step S504 and the point giving rate for the stay duration per time as stored in Figure **4D****.** Hereinafter, various modes of calculating points will be described.

### •Calculating points to give preferential treatment to the user who has stayed in the first predetermined area for a long time within a predetermined period

For example, the server device **310** may: calculate the total stay duration for which the user has stayed in a first predetermined area within a predetermined period based on the total of the first stay duration acquired in Step S504 and the stay duration in the past, for which the user stayed in the first predetermined area within the predetermined period, stored on the user database section **341;** specify the point giving rate based on the total stay duration for which the user has stayed in the first predetermined area within the predetermined period; and calculate the points to be given to the user based on the first stay duration acquired in Step S504 and the specified point giving rate. In this way, it is possible to calculate the points so as to give preferential treatment to the user who has stayed in the first predetermined area for a long time within a predetermined period.

The specification of the point giving rate may be achieved by selecting one point giving rate corresponding to a predetermined condition from among a plurality of point giving rates (e.g., by selecting one point giving rate corresponding to the condition for the division of the stay duration from among the three point giving rates corresponding to the stay duration per time shown in Figure **4D****)** or may be achieved by applying a predetermined function to the total stay duration for which the user has stayed in the first predetermined area within a predetermined period and calculating the point giving rate.

### •Calculating points to give preferential treatment to the user who has stayed in a plurality of predetermined areas, including the first predetermined area, for a long time within a predetermined period

For example, the server device **310** may: calculate the total stay duration for which the user has stayed in a plurality of predetermined areas within a predetermined period, based on the total of the first stay duration acquired in Step S504 and the stay duration in the past, for which the user stayed in the plurality of areas within the predetermined period, stored in user database section **341;** specify the point giving rate based on the total stay duration for which the user has stayed in the plurality of areas within the predetermined period; and calculate the points to be given to the user based on the first stay duration acquired in Step S504 and the specified point giving rate. In this way, it is possible to calculate the points so as to give preferential treatment to the user who has stayed in the plurality of predetermined areas, including the first predetermined area, for a long time within a predetermined period.

The specification of the point giving rate may be achieved by selecting one point giving rate corresponding to a predetermined condition from among a plurality of point giving rates (e.g., by selecting one point giving rate corresponding to the condition for the division of the stay duration from among the three point giving rates corresponding to the total stay duration within a predetermined period) or may be achieved by applying a predetermined function to the total stay duration for which the user has stayed in the plurality of predetermined areas, including the first predetermined area, within a predetermined period and calculating the point giving rate.

### •Calculating points according to the current congestion status of the first predetermined area

For example, the server device **310** may receive congestion status information indicating a current congestion status in the first predetermined area, from at least one management device. This allows the server device **310** to acquire the congestion status information. The server device **310** may calculate the points to be given to the user based on the first stay duration acquired in Step S504 and the congestion status information.

The calculation of the points to be given to the user based on the first stay duration and the congestion status information may be achieved, for example, by specifying the point giving rate corresponding to the congestion status information, based on the congestion status information and the information indicating the correspondence relation between the congestion status information and the point giving rate, and applying the first stay duration to the point giving rate. The information indicating the correspondence relation between the congestion status information and the point giving rate is stored on the rate database section **344,** and an example of the structure of the information indicating the correspondence relation between the congestion status information and the point giving rate is the same as the structure of the information about the point giving rate shown in Figure **4D****.**

The congestion status information may be, for example, such information that is generated through the entering thereof into at least one management device by the business operator of the first predetermined area, such information that is generated by the artificial intelligence (AI) or machine learning functions installed in at least one management device, or such information that is generated by at least one management device applying the congestion status information to a predetermined function.

This allows the business operator of the first predetermined area to change the point giving rate in real time according to the congestion status in the first predetermined area. For example, when the first predetermined area is congested, the point giving rate per unit time may be reduced, which makes it possible to guide the user to the outside of the first predetermined area in real time and which in turn makes it possible to control the behavior of the user. For example, when the congestion status in the first predetermined area is quiet, the point giving rate per unit time may be increased, which makes it possible to guide the user to the inside of the first predetermined area in real time and which in turn makes it possible to control the behavior of the user.

### •Calculating points according to the forecast of future congestion in the first predetermined area

For example, the server device **310** may receive congestion forecast information indicating a congestion forecast of the first predetermined area from at least one management device. This allows the server device **310** to acquire the congestion forecast information. The server device **310** may calculate the points to be given to the user based on the first stay duration acquired in Step S504 and the congestion forecast information.

The calculation of points based on the first stay duration and the congestion forecast information may be achieved, for example, by specifying the point giving rate corresponding to the congestion forecast information, based on the congestion forecast information and the information indicating the correspondence relation between the congestion forecast information and the point giving rate, and applying the first stay duration to the point giving rate. The information indicating the correspondence relation between the congestion forecast information and the point giving rate is stored on the rate database section **344,** and an example of the structure of the information indicating the correspondence relation between the congestion forecast information and the point giving rate is the same as the structure of the information about the point giving rate shown in Figure **4D****.**

Examples of the congestion forecast information include, but are not limited to, "the congestion level in the area will be 90% within one hour" and "13:00 to 15:00 is the time zone with the highest level of congestion". The congestion forecast information may be, for example, such information that is generated through the entering thereof into at least one management device by the business operator of the first predetermined area, such information that is generated by the artificial intelligence (AI) or machine learning functions installed in at least one management device, or such information that is generated by at least one management device applying the congestion status information to a predetermined function.

This allows the business operator of the first predetermined area to change the point giving rate in real time according to the forecast of the future congestion status in the first predetermined area. For example, when the first predetermined area is forecasted to be congested within an hour, the point giving rate per unit time may be reduced, which makes it possible to reduce the number of users entering the first predetermined area within one hour and which in turn makes it possible to control the behavior of the users. For example, when the first predetermined area is forecasted to be quiet within an hour, the point giving rate per unit time may be increased, which makes it possible to increase the number of users entering the first predetermined area within one hour and which in turn makes it possible to control the behavior of the users.

### •Calculating points according to user location information indicating the location of the user

For example, the server device **310** may acquire user location information indicating the location information of the user. The server device **310** may calculate the points to be given to the user based on the first stay duration acquired in Step S504 and the user location information.

Examples of the user location information include, but are not limited to, information indicating the location of a seat at the counter, information indicating the location of a seat at a table, and information indicating the location of a VIP seat, when the first predetermined area is an area where food and drink are served by a restaurant. Other examples of the user location information include, but are not limited to, information indicating the locations of seats from the front row to the third row, and information indicating the locations of seats behind the third row, when the first predetermined area is an area where the seats are installed in a movie theater.

Acquiring the user location information indicating the location information of the user may be achieved, for example, by acquiring the location information of the terminal device(s) that detected the entry of the user into the detection range and the exit of the user from the detection range, of the at least one terminal device(s), or by the GPS function of the user device possessed by the user.

In this way, the business operator in the first predetermined area may specify a particular, less popular place within the first predetermined area, and may increase the point giving rate when the user stays in that particular place. This allows preferential treatment to be given to the user who stays in the particular place that is less popular within the first predetermined area.

Step S506: The server device **310** executes the processing for giving the points calculated in Step S505 to the user. The processing for giving the points includes, but is not limited to, for example, the processing of adding the points to be given to the user among the points owned by the business operator in the first predetermined area to the points owned by the user, the processing of displaying the number of points of the user after the addition on the user device possessed by the user, and the processing of updating information about the user stored on the user database section **341** (in particular, the total stay duration in a predetermined area, the current points owned, and the total points owned in the past).

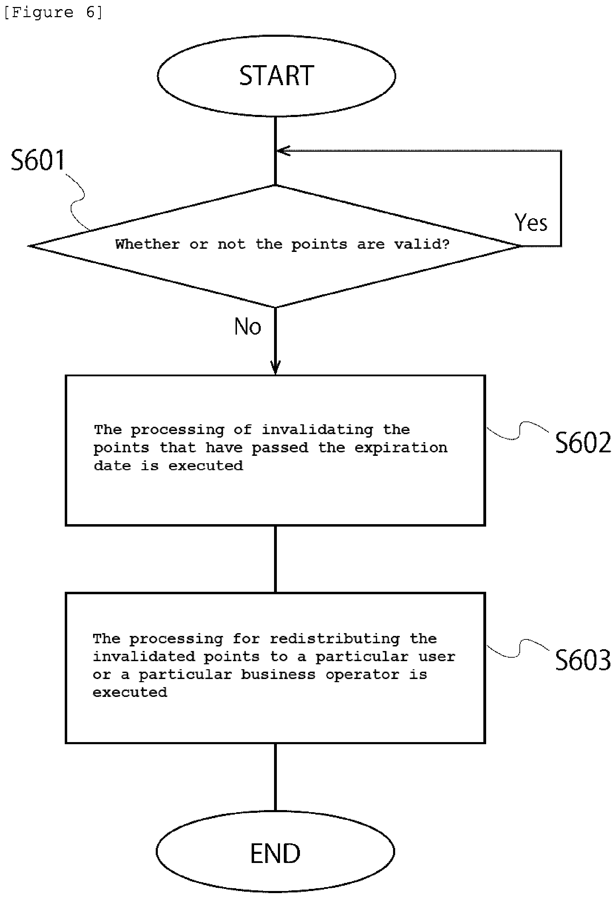

Figure 6 shows an example of the flow of processing executed in the server device **310.** Note that each step shown in Figure 6 is executed by the processor section **312** of the server device **310.** Hereinafter, each step shown in Figure 6 will be described.

Step S601: Whether or not the points are valid is determined. If the result of the determination is "Yes", the processing returns to Step S601, whereas if the result of the determination is "No", the processing proceeds to step S602. This processing is achieved, for example, by determining whether the points have passed the expiration date included in the information about the points stored on the point database section **343.** If it is determined that the points have not passed the expiration date, the points are determined to be valid. If it is determined that the points have passed the expiration date, the points are determined to be invalid. This processing is executed, for example, by referring to the point expiration date shown in Figure 4C.

Step S602: The processing of invalidating the points that have passed the expiration date is executed.

Step S603: The processing for redistributing the invalidated points to a particular user or a particular business operator is executed. Hereinafter, various modes for redistributing invalidated points to a particular user or a particular business operator will be described.

For example, the processing for redistributing the invalidated points to a particular user is executed based on the amount of predetermined virtual currency owned by each user, stored on the user database section **341.** Alternatively, the processing for redistributing the invalidated points to a particular business operator is executed based on the amount of predetermined virtual currency owned by each business operator, stored on the business operator database section **342.** In this way, redistributing invalidated points based on the amount of predetermined virtual currency owned by multiple users or multiple business operators makes it possible to generate an incentive to own more predetermined virtual currency.

For example, the processing for redistributing the invalidated points to a particular user is executed based on the total first stay duration for which the user has stayed in the first predetermined area within a predetermined period, stored on the user database section **341.** This allows achieving of point redistributing that gives preferential treatment to the user who has stayed in one predetermined area for a long time.

For example, the processing for redistributing the invalidated points to a particular user is executed based on the total stay duration for which the user has stayed in a plurality of predetermined areas within a predetermined period, stored on the user database section **341.** This allows achieving of point redistributing that gives preferential treatment to the user who has stayed for a long time across the plurality of predetermined areas.

For example, the processing for redistributing the invalidated points to a particular user is executed based on the frequency of point usage of the user, stored on the user database section **341.** This allows achieving of point redistributing that gives preferential treatment to the user who frequently uses points.

For example, the processing for redistributing the invalidated points to a particular business operator is executed based on the information about users (e.g., the total stay duration of all users per unit time in a predetermined area managed by the business operator, or the total number of users per unit time in a predetermined area managed by the business operator) stored on the business operator database section **342.** This allows achieving of point redistribution that gives preferential treatment to the business operator that is actively contributing to the distribution of points to society by giving more points to users.

The points given may have different values in accordance with the area where the points are used. For example, the point giving in Step S506 in Figure 5 and/or the point redistribution in Step S603 in Figure 6 may be executed in a state associated with the information for identifying the business operator in the first predetermined area; and If the user uses points in the first predetermined area, the points being associated with the information for identifying the business operator in the first predetermined area, the points may be processed as points of higher value compared to when the user uses the points in any area other than the first predetermined area. This allows increasing of the probability that points acquired by staying in the first predetermined area for a long time will be used in the first predetermined area, and also allows circulating the points actively within the first predetermined area. These processing are executed, for example, by referring to the number of points as well as the business operator ID and user ID shown in Figure 4C.

The computer system **300** may further comprise a tool for acquiring information about the settlement of the user (e.g., a wearable tool attached to the user (such as a type of seal-type tool that is used by sticking it on the user's arm, a type of wristband-type tool that is used by wrapping it around the wrist of the user, and a type of necklacetype tool that is used around the user's neck)). In this case, it is preferable to register the information about the user (e.g., user ID, nationality, language used, gender, age, and family make-up) who attaches himself the tool in advance before using the tool for acquiring the information about the settlement of the user. That is, it is preferable that such a tool is configured so that the user can be identified by using the user ID upon the use thereof. This allows the server device **310** to analyze the behavior of the user (e.g., by nationality, by language used, by gender, by age, or by family make-up) based on the user's location information acquired from the at least one terminal device and the user's settlement information acquired from the device for acquiring the settlement information of the user. The analysis of the behavior of the user in this way allows understanding of a user, the route the user followed, the location and the area thereof that the user took time to tour, the products the user purchased, and the amount he paid for the products (e.g., by nationality, by language used, by gender, by age, or by family make-up). The above tool may be configured to transmit the location information about the user to the server device **310.**

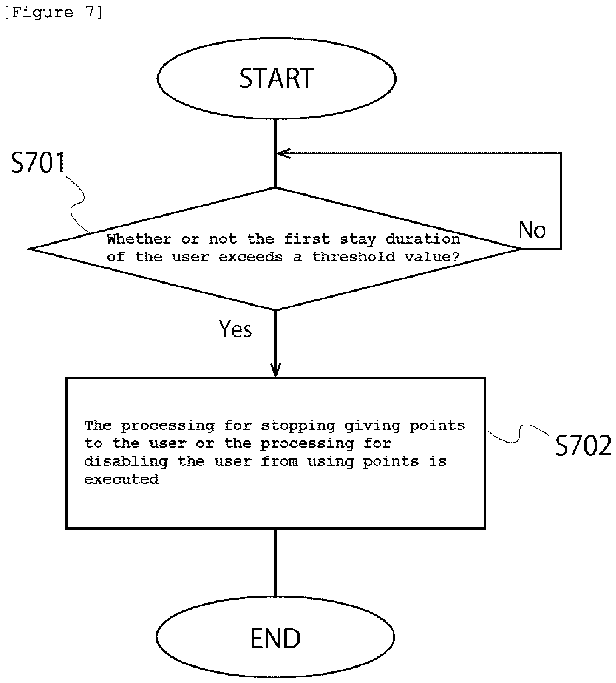

Figure **7** shows another example of the flow of processing executed in the server device **310.** Note that each step shown in Figure **7** is executed by the processor section **312** of the server device **310.** Hereinafter, each step shown in Figure **7** will be described.

Step S701: Whether or not the first stay duration exceeds a predetermined threshold value is determined. If the result of the determination is "Yes", the processing returns to Step S701, whereas if the result of the determination is "No", the processing proceeds to Step S702.

Step S702: The processing for stopping giving points to the user, or the processing for disabling the user from using points, is executed. This allows suppressing of gambling addiction caused by staying for a long time in an area where gambling such as casino is taking place.

### 2. Point Service with Tip Function

The Applicant proposes a new point service capable of making a "social tipping" to give a tip as a reminder that the service has been received. This is intended to make it easier to show appreciation to service providers, in light of the conflict of wanting to thank such service providers that have provided some service but refraining from giving cash or goods to them.

As used herein, the term "service provider" means a person who provides a service. Further, the term "service" as used herein may be any service, and it may be, for example, a service provided by a service provider by actually (physically) meeting the service provider.

### 2.1 Screen displayed on the User Device

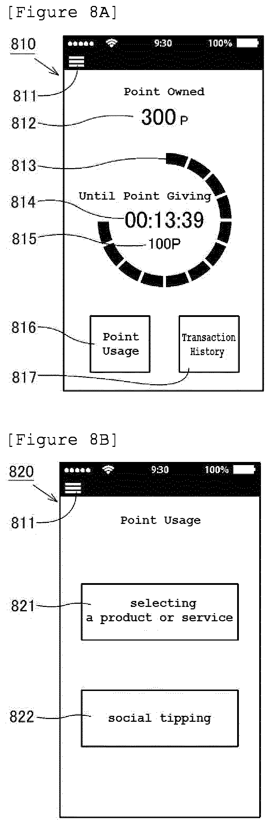

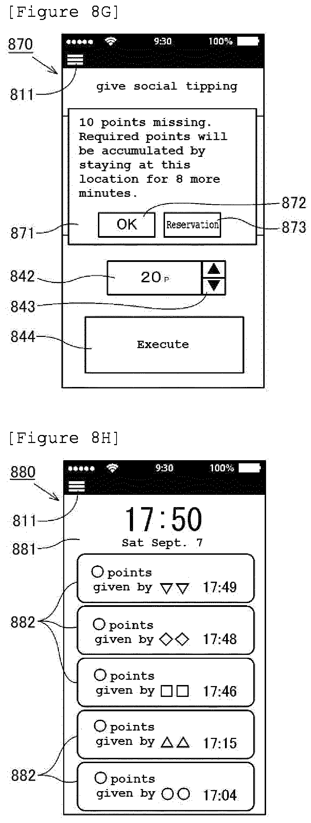

Figures **8A** to **8H** show examples of the screen displayed on the user device.
The screens shown in Figures **8A** to **8G** are the screens displayed on the user device operated by the point donor (user **A),** while the screen shown in Figure 8H is the screen displayed on the user device operated by the point recipient (service provider). Note that the user **A** is assumed to be staying in the first predetermined area of a plurality of predetermined areas.

Figure **8A** shows an example of a screen **810** for displaying a main menu.

According to the embodiment shown in Figure **8A****,** the screen **810** includes: a menu button **811** for calling various functions; an owned points display section **812** for showing the total number of owned points of the user **A** (i.e., the number of points owned by the user **A);** a stay duration graph display section **813** for showing the ratio of the stay duration out of the time required to receive point-giving in the first predetermined area; a remaining duration display section **814** for displaying the time remaining until the points are given; a number-of-points-to-be-acquired display section **815** for indicating the number of points to be acquired when the point giving condition(s) are met; a point usage button **816** for using points; and a transaction history button **817** for checking transaction history.

According to the embodiment shown in Figure **8A****,** the user **A** currently owns 300 points, and the user **A** will be given 100 points when the user **A** stays in the first predetermined area for another 13 minutes and 39 seconds.

Figure **8B** shows an example of a screen **820** for using points. The screen **820** is a screen transitioned from the screen **810,** for example, by selecting the point usage button 816 shown in Figure **8A****.**

According to the embodiment shown in Figure **8B****,** the screen **820** includes: a product service selection button **821** for selecting a product or service desired to be purchased by consuming the given points (i.e., a button for "selecting a product or service"); and a point donation button **822** for donating points as social tipping or a tip (i.e., a button for "executing social tipping").

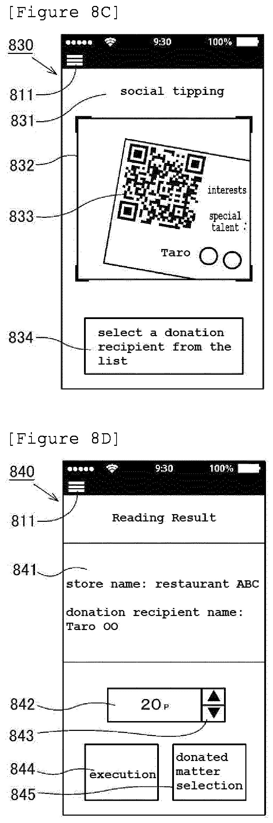

Figure **8C** shows an example of a screen **830** for specifying the service provider **B,** who has provided service for the user **A.** The screen **830** is a screen transitioned from the screen **820,** for example, by selecting the point donation button **822** shown in Figure **8B****.**

According to the embodiment shown in Figure **8C****,** the screen **830** comprises: a point donation display section **831** for indicating that the screen is for donating points (i.e., the display section for "performing social tipping"); a captured image display section **832** for displaying in real time an image being captured by the image capturing means (e.g., a camera) of the user device; and a list display button **834** for displaying a list of candidates for point donation, including the service provider **B.**

According to the embodiment shown in Figure **8C****,** a QR code^{®} **833** for identifying the service provider **B** is being displayed in the captured image display section **832** (for example, by the user **A** holding the user device over the QR code^{®} **833** for identifying the service provider **B).** This allows the user device to read the data of the QR code^{®} **833** for identifying the service provider **B** and specify that the service provider **B** is the recipient of the points to be donated by the user **A.**

Figure **8D** shows an example of a screen **840** for displaying information about the service provider **B** that has provided the service for the user **A.** The screen **840** is a screen transitioned from the screen **830,** for example, by reading the QR code^{®} **833** for identifying the service provider **B,** displayed in the captured image display section 832 shown in Figure **8C****.**

The screen **840** includes: a party-to-be donated display section **841** for displaying the full name of the service provider **B** and the name of the first predetermined area where the service provider **B** is present, as the information about the donation recipient; a number-of-donated-points designation section **842** for designating the number of points to be donated; a donation point increase/decrease button **843** for increasing or decreasing the number of points to be donated; an execution button **844** for executing point donation; and a donated matter selection button **845** for displaying the screen for selecting a matter to be donated. The number-of-donated-points designation section **842** allows the number of points to be entered directly when the entering part thereof is selected and also allows the points to be increased or decreased by a predetermined number (e.g., 10 points or 5 points) when the donation point increase/decrease button **843** adjacent to the entering part is selected.

According to the embodiment shown in Figure **8D****,** "Taro 00" is displayed as the full name of the service provider **B,** and "restaurant ABC" is displayed as the name of the first predetermined area where the service provider **B** is present, on the screen **840,** on which the user **A** is about to donate 20 points to the service provider **B.** The selection of the execution button **844** in the state shown in Figure 8D by the user **A** causes 20 points to be donated from the user **A** to the service provider **B.**

When the donated matter selection button **845** is selected, the screen **840** transitions to a donated matter selection screen (not shown) for selecting a matter to be donated. On the donated matter selection screen, the user can select a matter to be donated to the service provider **B,** and the donated matter selection screen is configured to be capable of appropriately making a selection of a donated matter through the display of a list of, or the search of, donated matters (e.g., products, services, and virtual currencies).

According to the embodiment shown in Figure **8C****,** an example has been described in which a QR code^{®} **833** for identifying the service provider **B** is read to specify the service provider **B;** however, the present invention is not limited thereto. For example, the face of the service provider **B** may be displayed on the captured image display section 832 (for example, by the user **A** holding the user device over the face of the service provider **B),** and the user device may read feature data of the face of the service provider **B,** by the face authentication function, from the face of the service provider **B,** so as to specify that the service provider **B** is the recipient of the points to be donated by the user **A.** In this case, the information about the service provider **B** may be displayed on the screen **840** in Figure **8D** as a result of reading the feature data of the face of the service provider **B** by the user device.

In this way, the service provider (donation recipient) can be specified by the authentication by the QR code^{®} or face authentication, so that the points can be reliably donated to the donation recipient in sight through a simple operation. Therefore, the user **A** can donate points immediately on the spot, as social tipping or tipping, to the donation recipient whom the user **A** likes, and this allows promoting of a culture of point donation.

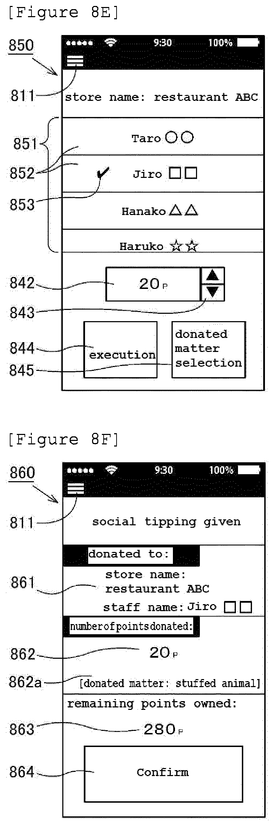

Figure **8E** shows an example of a screen **850** for displaying a list of candidates for point donation, including the service provider **B.** The screen **850** is a screen transitioned from the screen **830,** for example, by selecting the list display button **834** shown in Figure 8C.

According to the embodiment shown in Figure **8E****,** the screen **850** includes: an all-candidate-list display section **851** for displaying a list of all donation recipient candidates present in the first predetermined area; a number-of-donated-points designation section **842,** which has been mentioned above; a donation point increase/decrease button **843;** and an execution button **844.** All the donation recipient candidates include the service provider **B.** Note that the first predetermined area may be specified based on, for example, the location information about the user device and the pre-stored location information about the first predetermined area.

According to the embodiment shown in Figure **8E****,** displayed in a row (e.g., in the vertical direction) in the all-candidate-list display section **851** are as many donation recipient candidate name display sections **852,** each displaying the full name of a donation recipient candidate, as the number of donation recipient candidates present in the first predetermined area. The all-candidate-list display section **851** is configured so that swipe operation can be executed in the direction of alignment of the donation recipient candidates (in the vertical direction according to the embodiment shown in Figure **8E****),** where the swipe operation allows displaying and confirming of all the donation recipient candidate names even if there are a large number of such donation recipient candidate names. When any donation recipient candidate is selected among them, a donation recipient check indication **853** for indicating selection has been made, may be displayed on a selected, donation recipient candidate name display section **852.** The user **A** can select the execution button **844** in the state as shown in Figure **8E** so as to donate the points designated in the number-of-donated-points designation section **842** to the donation recipient candidate on whom the donation recipient check indication 853 is put.

According to the embodiment shown in Figure **8E****,** since the donation recipient check indication **853** is displayed in the donation recipient candidate name display section **852** for a service provider C, "Joro □ □ ", in the first predetermined area, the "restaurant ABC", the service provider C, " Joro □□", in the first predetermined area, the "restaurant ABC", is selected as a donation recipient.

Note that the nicknames, interests, face photo, portrait, etc., of the donation recipient candidate may further be displayed in the donation recipient candidate name display section **852.** This makes it easier for the user **A** to correctly recognize the donation recipient to whom the user desires to donate the points and makes it possible to prevent the user **A** from giving up donating the points because the user **A** does not know who the donation recipient the user desires to donate the points is.

Figure **8F** shows an example of a screen **860** for showing that point donation is completed. The screen **860** is a screen transitioned from the screen **840,** for example, by selecting the execution button **844** shown in Figure **8E** when the number of points owned by the user **A** exceeds the number of points to be donated to the donation recipient.

According to the embodiment shown in Figure **8F****,** the screen **860** includes: a donation recipient display section **861** for showing information about a donation recipient; a number-of-donated-points display section **862** for showing the number of points donated to a donation recipient; a donated-matter display section **862a** for showing a donated matter donated to a donation recipient; a remaining-number-of-owned-points display section **863** for showing the number of points owned by the user **A** (the number of remaining points) after donating points to a donation recipient; and a confirmation button **864** for making a confirmation and returning to the main menu.

According to the embodiment shown in Figure **8F****,** displayed in the party-to-be donated display section **861** are: the service provider C, " Joro □ □ ", as a donation recipient; and the name of the first predetermined area, "restaurant ABC", where the service provider C is present. In addition, 20 points and a donated matter, "stuffed animal", have been donated to the service provider C, and the user **A** owns 280 points after donating the points.

Figure **8G** shows an example of a screen **870** for warning of insufficient points. The screen **870** is a screen transitioned from the screen **840,** for example, by selecting the execution button **844** shown in Figure **8E** when the number of points owned by the user **A** is less than the number of points to be donated to the donation recipient.

The screen **870** includes an insufficient point message display section **871** for indicating that the points are insufficient. The insufficient point message display section **871** may be displayed overlapping, for example, the screen **840** shown in Figure 8D or the screen **850** shown in Figure **8E****.** According to the embodiment shown in Figure **8G****,** the insufficient point message display section **871** is displayed overlapping the screen **840** shown in Figure **8D****.**

Displayed on the insufficient point message display section **871** are: the number of points missing; and the time required to accumulate the "remaining points", the points of which are required for the number of points owned by the user **A** to exceed the number of points to be donated to the service provider. The insufficient point message display section **871** includes: an OK button **872** to enter the confirmation of the message that warns of insufficient points; and a reservation button **873** for reserving the donating of points to a service provider so that the points to be donated to the service provider can be donated to the service provider at the time when the "remaining points" are accumulated.

When the user **A** selects the OK button **872,** the screen **870** transitions to the screen **840** shown in Figure **8D** or the screen **850** shown in Figure **8E****.** Thereafter, the user A can change the number of points donated to the service provider and stop donating points, as needed.

When the user **A** selects the reservation button **873,** the screen **870,** for example, transitions to a screen (not shown) indicating that the reservation for point donation has been completed. Furthermore, for example, after the user **A** stays in the first predetermined area for the time required for the "remaining points" to accumulate, the user **A** may be notified that the point donation has been completed to the service provider

In this way, the user **A** can make a reservation to automatically donate points at the time when the points are accumulated, even if the points to be donated are insufficient at the time of point donating, which allows reducing of the chances of giving up point donation and promoting of the point donation. Furthermore, the setting of the conditions for the user **A** to donate points (e.g., only the points given by staying in the first predetermined area can be donated, only the points given by staying in a plurality of predetermined areas including the first predetermined area can be given) allows promoting of the use of the first predetermined area and a plurality of predetermined areas.

Figure **8H** shows an example of a screen **880** indicating that points have been donated. The screen **880** is such a screen that is displayed when points are donated by the user **A.**

According to the embodiment shown in Figure **8H****,** the screen **880** includes: a standby screen **881** that includes the time, date, and day of the week; and a plurality of receipt notification sections **882** that notify that the points have been donated. Each of the plurality of receipt notification sections **882** includes the full name of the user A who donated the points, the number of points donated, and the time of notification. The plurality of receipt notification sections **882** are displayed in a row such that each time point donation is notified, the previous notification is displayed below and the latest notification is displayed on top. Therefore, when point donation is executed continuously by a large number of users, a new receipt notification section **882,** along with a notification sound, appears one after another above the already displayed receipt notification section **882,** where the already displayed receipt notification sections **882** thus move down one after another below on the screen **880.**

In this way, when the point donation is executed, the user device of the service provider is notified immediately, which allows the service provider to immediately recognize that the service provider has received the point donation. For example, in the case of the service provider to be an idol on an event stage or a sports player during a match, if an event occurs in which they receive donations of a large number of points from a large number of users in a particular scene, the business operator (e.g., an event organizer, or a match organizer) can know on the spot that the particular scene is preferred by the large number of users, and later confirm and know the receipt time. In addition, similar to the business operator, the service provider who receives the point donation can also know on the spot how much point donation they have received, and later confirm and know the receipt time.

Note that, according to the embodiments shown in Figures **8E** and **8F****,** while examples in which the name of the predetermined area where the service provider is present is displayed on the screen have been described, the present invention is not limited thereto. For example, the name of the facility to which the service provider belongs and/or the name of the business operator that manages the service provider may be displayed, along with the full name of the service provider (donation recipient).

In this way, as shown in Figure **8C** and Figure **8E****,** it is possible to select the donation recipient of the points, which makes it possible to control to whom the points are to be donated, and which further makes it possible to improve the user satisfaction.

According to the embodiment shown in Figure **8E****,** a list of the donation recipient candidates present in the first predetermined area is displayed. This allows to prevent the occurrence of accidental donation of points to donation recipients who are not present in the first predetermined area. In addition, around the time the user **A** finishes using the first predetermined area, the user **A** can also donate points to the best donation recipient among the service providers who have attended by then. Accordingly, the user **A** can donate points even when the desired donation recipient is not present in sight, which allows to prevent the user **A** from giving up donating the points because the desired donation recipient hardly comes close.

On the screen **850** shown in Figure **8E****,** for example, all the donation recipient candidates managed by the business operator that manages the first predetermined area may be listed, regardless of whether they are present in the first predetermined area or not, instead of the donation recipient candidate present in the first predetermined area. This allows donating of points to the user's desired donation recipient candidate, for example in the form of "voting".

Furthermore, after the screen **870** shown in Figure **8G** is displayed, and if the user **A** moves out of the first predetermined area before the time required for the "remaining points" to accumulate has elapsed, a point-giving incomplete notification may be sent to the user device of the user **A,** the notification of which indicates that "remaining points" have not been sufficiently given or accumulated in the first predetermined area. This allows prompting of the user **A** to stay in the first predetermined area and allows contributing to the sales promotion related to the first predetermined area. For example, in the case of the time obtained by adding the additional time (for example, 15 minutes) to the average viewing time (for example, 1 hour) set as the condition data for giving points in the aquarium, and the entire aquarium, including shops, set as the first predetermined area, when a visitor who has finished viewing in the aquarium is about to leave, the remaining time required for point donation is displayed on the user device. This allows the user to stay at a shop etc. until the point donation is executed, which makes it possible to promote the purchasing behavior at the shop.

Moreover, after the screen **870** shown in Figure **8G** is displayed, and if the user **A** moves out of the first predetermined area before the time required for the "remaining points" to accumulate has elapsed, but the user **A** returns to the first predetermined area within a predetermined amount of time after moving out of the first predetermined area, points can be continuously accumulated on top of the points accumulated up to that point. If the user **A** returns to the first predetermined area after a predetermined amount of time has passed since the user **A** moved out of the first predetermined area, he points accumulated up to that point may be invalidated (zeroed). This allows to prevent, for example, the user **A,** who revisits the first predetermined area the following day, from benefiting from continued point accumulation, which therefore allows to prevent a decrease in the sales promotion effect due to the point giving.

Moreover, the service provider may be allowed to set a gift-in-return. This allows the service provider to provide a gift-in-return to the user in response to the points donated by the user, which in turn can give the user an incentive to donate points. A gift-in-return can be, for example, an item corresponding to a service provider (i.e., an item associated with a service provider) (for example, if the service provider is an idol, the image data, autograph, and photo book of that idol).

### 2.2 Configuration of the System for Achieving Point Service with Tipping Function

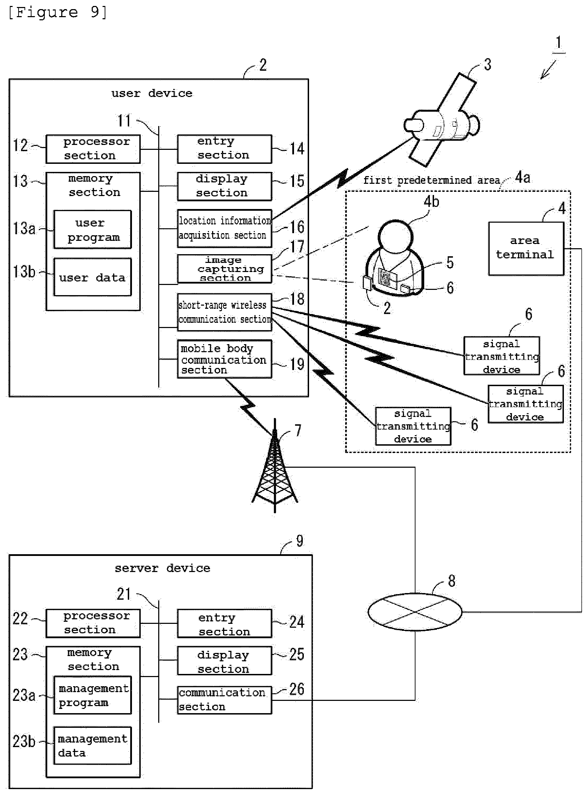

Figure **9** shows an example of a configuration of the system for achieving a point service with a tipping function.

According to the embodiment shown in Figure **9****,** a computer system **1** comprises: a user device **2** used by the user; a GPS satellite **3** used for position measurement by GPS (Global Positioning System); a QR code^{®} **5** (i.e., a medium for identifying the donation recipient) possessed by a donation recipient **4b** (e.g., staff working in first predetermined area **4a,** performers (such as, musicians and dancers), sports players, etc.) in the first predetermined area **4a** among a plurality of predetermined areas; a plurality of signal transmitting devices **6** located in the first predetermined area **4a;** a communication antenna device **7** for wirelessly communicating with a mobile body communication section 19 of the user device **2;** an Internet **8** (telecommunications line) for data communication via a communication antenna device **7** and data communication with an appropriate router and computer; and a server device **9** for managing various data. As shown in Figure **9****,** the donation recipient **4b** may have a user device **2** and a signal transmitting device **6.**

According to the embodiment shown in Figure **9****,** the user device **2** comprises: a processor section **12** for executing various operations and controls, having a CPU, ROM, and RAM; a memory section **13** for storing data, composed of a hard disk, nonvolatile memory etc.; an entry section **14** for accepting entered operations, composed of a touch panel etc.; a display section **15** capable of displaying the screen in color, composed of a liquid crystal display, an organic EL display etc.; a location information acquisition section **16** for receiving GPS signals from a GPS satellite **3** to acquire location information; an image capturing section **17** for capturing a still image and video with a camera; a short-range wireless communication section **18** for communicating with a signal transmitting device **6** by wireless communication by Bluetooth^{®}; a mobile body communication section **19** for wirelessly communicating with an antenna device **7** in accordance with mobile communication standards, such as LTE (Long Term Evolution); and a bus **11** for connecting the above constituent elements. The user device **2** also comprises a wireless communication section (not shown), and further comprises a function to connect to an Internet **8** by wireless communication with Wi-Fi standards.

A user program **13a** (time value point usage program) and user data **13b** are stored on the memory section **13** of the user device **2.** On the memory section **13** of the user device 2 possessed by the donation recipient **4b,** the same user program **13a** and user data **13b** as those stored on the memory section **13** of the user device **2** may be stored, or other user program **13a** and user data **13b** different from those stored on the memory section **13** of the user device **2** may be stored as the donation recipient program and donation recipient data for the donation recipient.

The user program **13a** is a program that causes the processor section 12 to execute various functions (e.g., a location specifying function to receive a signal from a signal transmitting device **6** and specify the location, an elapsed time measurement function to measure elapsed time at that location, a point receiving function to receive the points provided in the first predetermined area **4a** according to the elapsed time, a product service purchase function to purchase a product and/or service (hereinafter referred to as "product/service" in the present specification) according to the points owned, a point donation function to donate the points owned, a donation recipient specifying function to specify a donation recipient by reading a QR code^{®} **5** etc., and a donation receipt notification function to notify the donation recipient of what and how much was received from whom, upon receiving point donation (including the donation of products and donated matters (e.g., virtual currency) purchased by points), as the processing for the donation recipient). Note that the user program **13a** may not comprise the donation receipt notification function, and a separate donation recipient program may comprise the donation receipt notification function. As a result, the user program **13a** installed in the user device **2** used by the user, and the donation recipient program installed in the user device **2** used by the donation recipient, can be different programs, respectively. In this regard, any approaches may be used as to the way of storing the user program **13a** on the memory section **13.** For example, the user program **13a** may be pre-installed in the memory section **13.** Alternatively, the user program **13a** may be installed in the memory section **13** by being downloaded via a network, such as the Internet **8,** or the user program **13a** may be installed in the memory section **13** via a storage medium, such as an optical disc or a USB.

The user data **13b** only needs to store at least the information for identifying the user (user ID) and may further store the user's personal information (e.g., the user's full name, address, phone number, and email address) and the owned points owned by the user. The user ID may have a different structure from the information for identifying the donation recipient (donation recipient ID), or the user ID may have the same structure as the information for identifying the donation recipient (donation recipient ID) and may be used as a common ID. Specifically, one user ID may be issued regardless of the user or the donation recipient, and the user ID may have such a structure in which usage classification data indicating whether to use as a user, as a donation recipient, or as both a user and a donation recipient is stored together.

The first predetermined area **4a** is, for example, a restaurant, a massage parlor, a spa, a clothes shop, a grocery store, a pharmacy, a concert hall, a club with live music, an amusement facility, a sports facility, an aquarium, a zoo, a conference room, a hotel, and a park.

The signal transmitting device **6** is located in the first predetermined area **4a** in order to attract users by giving points according to elapsed time etc. The signal transmitting device **6** is a device capable of transmitting a signal (e.g., a beacon signal) that can be read by Bluetooth^{®}. The user device **2** can specify the signal transmitting device **6** by reading the beacon signal, and the user device **2** can also determine the signal transmitting device **6** and its location from which the user device has received the beacon. The server device **9** can receive beacon signals that the user device **2** received from three or more signal transmitting devices **6,** from the user device **2,** and by measuring the signal strength thereof, to specify where the user is present (stays) in a particular area, including the area surrounded by the three signal transmitting devices **6** and a surrounding area thereof.

In addition, an area terminal 4 is located in the first predetermined area **4a.** The area terminal 4 is, for example, a personal computer, such as a desktop PC, a laptop PC or a notebook PC. The area terminal 4 has: a processor section for executing various operations and controls, having a CPU, ROM, and RAM; a memory section for storing data, composed of a hard disk, nonvolatile memory etc.; an entry section for accepting entered operations, composed of a keyboard and a mouse, or a touch panel etc.; a display section capable of displaying the screen in color, composed of a liquid crystal display, an organic EL display etc.; and a communication section, such as a LAN board, that connects to an Internet 8 by wire communication. The area terminal 4 may be operated, for example, by the donation recipient (service provider) **4b** or by the business operator in the first predetermined area **4a.**

The QR code^{®} **5** is given a unique identification code for (every first predetermined area **4a** and) every donation recipient **4b.** The reading of the QR code^{®} **5** by the user device **2** makes it possible to find out who the donation recipient (service provider) **4b** is and which predetermined area that person is in.

The communication antenna device 7 accepts calls and data transmission/reception using the LTE line, and accepts data communication, such as website browsing and mail transmission/reception, via the Internet 8.

Internet 8 allows for communication between devices connected all over the world.

According to the embodiment shown in Figure 9, the server device **9** has: a processor section 22 for executing various operations and controls, having a CPU, ROM, and RAM; a memory section **23** for storing data, composed of a hard disk, nonvolatile memory etc.; an entry section 24 for accepting entered operations, composed of a keyboard, a mouse, etc.; a display section 25 capable of displaying the screen in color, composed of a liquid crystal display, an organic EL display etc.; and a communication section 26, such as a LAN board, that connects to an Internet 8 by wire communication.

A management program **23a** (time value point management program) and management data **23b** are stored on the memory section **23** of the server device **9.**

The management program **23a** is a program that causes the processor section 22 to execute various functions (e.g., an area management function to add, change or delete a predetermined area (such as the first predetermined area **4a),** an each-area's signal transmitting device management function to manage the location and identification information (ID) of the signal transmitting device **6** possessed by a predetermined area, an area-oriented point management function for the administrator of a predetermined area to purchase points, set conditions for point giving, etc., using the area terminal 4, a point-distribution-upon-the-reception setting function for the business operator of a predetermined area to set the ratio of distribution of the points donated by the user to the donation recipient **4b** between the donation recipient **4b** and the business operator of the predetermined area, and a point giving function to give points to a user who meets the conditions for point giving). In this regard, any approaches may be used as to the way of storing the management program **23a** on the memory section **23.** For example, the management program **23a** may be pre-installed in the memory section **23.** Alternatively, the management program **23a** may be installed in the memory section **23** by being downloaded via a network such as the Internet 8, or the management program **23a** may be in the memory section **23** via a storage medium, such as an optical disc or a USB.

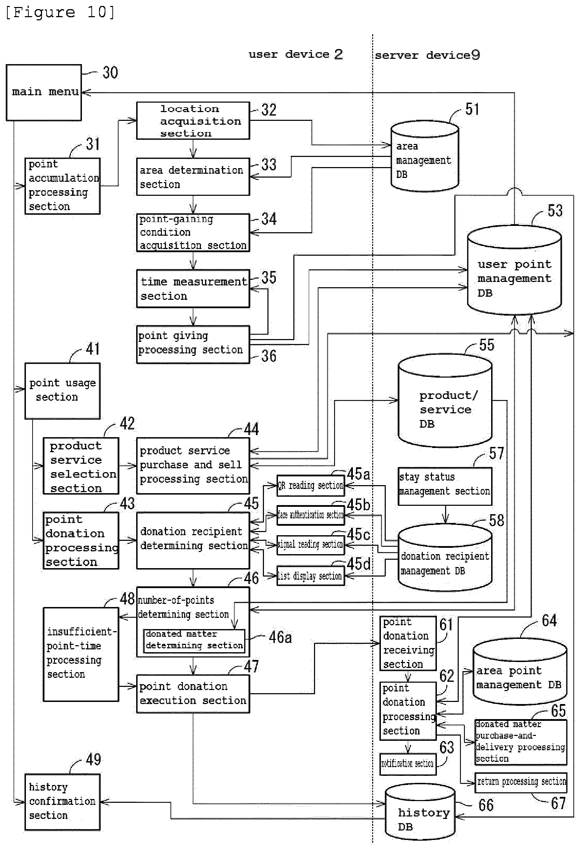

The management data **23b** has: a facility management database section **51** (product/service providing business operator data), a user point management database section **53** (owned point management data), a product/service database section 55, a donation recipient management database section 58 (donation recipient management data), an area point management database section **64,** and a history database section 66, which will be described below with reference to Figure 10.

The user's personal information (e.g., the user's full name, address, phone number, and email address) and the owned points owned by the user may be stored on the memory section **23** of the server device **9** in addition to the memory section **13** of the user device **2** or in place of the memory section **13** of the user device **2.**

Further, according to the embodiment shown in Figure 9, the user device **2,** server device **9,** and area terminal 4 have been described as capable of communicating with each other via the Internet 8; however, the present invention is not limited thereto. It is also possible to use any type of network instead of the Internet 8.

Further, according to the embodiment shown in Figure 9, an example with one user device and one predetermined area has been described; however, the present invention is not limited thereto. The number of user devices and the number of predetermined areas are each any integer greater than or equal to 1.

Figure 10 is a functional block diagram showing the main parts of the function of the processor section 12 of the user device **2** to work with the user program **13a** and the function of the processor section 22 of the server device **9** to work with the management program **23a.**

The user device **2** comprises: a point accumulation processing section 31; point usage section 41; and a history confirmation section 49, as functional sections that can be activated from the main menu 30.

The point accumulation processing section 31 causes the short-range wireless communication section 18 to work by the location acquisition section 32, receives a beacon signal transmitted from the signal transmitting device 6 in the first predetermined area **4a,** and transmits the data received from the beacon signal to the server device **9.** The server device **9** refers to the facility management database section **51** to specify the area terminal 4 and/or first predetermined area **4a** that is using the signal transmitting device 6 transmitting the received beacon signal, and transmits the area identification data for identifying the first predetermined area **4a** and the point giving condition data indicating the point giving conditions in the first predetermined area **4a,** to the user device **2.** At this stage, the location acquisition section 32 for acquiring and transmitting current location information and the area determination section 33 for specifying the predetermined area based on the current location information, function as the area stay determination means for determining the presence of a user device **2** (that is, the user staying) in a predetermined area, and the business operator identification means for identifying the business operator that provides the product/service.

The user device **2** specifies the first predetermined area **4a,** based on the received area identification data by the area determination section 33, and acquires the point giving conditions described in the received point giving condition data by the point-gaining condition acquisition section 34.

The user device **2** measures the time by the time measurement section 35, and when the point giving conditions are met, gives the user the points given under the point giving conditions by the point giving processing section 36. As for the time measurement and point giving, in reality, it is desirable that the user device **2** transmits the current time and the user's current location information (by the location acquisition section 32) to the server device **9** at predetermined time intervals (e.g., every one minute), and based on the accumulation thereof, the server device **9** determines whether or not the point giving conditions are met, and executes the point giving. Until the point giving conditions are met, the time measurement by the time measurement section 35 is continued, and location acquisition by the location acquisition section 32 is also executed. This allows the user device **2** and/or the server device **9** to recognize how long the user is staying in the first predetermined area **4a.** The given points are recorded in the user point management database section **53** by the point giving processing section 36, and the number of points owned by the user increases. At this stage, when, where, and how many points the user has gained is also recorded on the history database section 66.

In accordance with the selection of the product service selection button 821 or the point donation button 822, the point usage section 41 accepts the selection of either a product service selection section 42 for accepting the purchase of the product/service or a point donation processing section 43 for accepting point donation to the donation recipient **4b** in the form of tipping or social tipping.

When selected by the user, the product service selection section 42 accesses the user point management database section **53** of the server device **9** to display the user's owned points, and accesses the product service database section 55 of the server device **9** to acquire list data of products and services that can be purchased in the first predetermined area **4a,** thereby executing the processing of allowing the user to select which product or service to purchase. When a product or service is purchased, the processing of providing the product or service to the user (e.g., processing of shipping the product or processing of starting to provide the service) is executed, and the server device **9** subtracts and records the number of points (point amount) required to purchase the product or service from the user point management database section **53.** The server device **9** also records this usage history in the history database section 66.

The point donation processing section 43 determines the donation recipient to whom point donation is made, by the donation recipient determining section 45 (donation recipient specifying means). This determination of the donation recipient may be achieved by, for example, authentication by reading QR code^{®}, face authentication, authentication by a signal transmitting device, a selection from a list, etc.

When the QR reading section 45a is activated, the user device **2** captures an image by the image capturing section 17 and reads the QR code^{®} 5 included in the captured image. This QR code^{®} 5 includes area identification data for identifying the first predetermined area **4a** and donation recipient identification data for identifying the donation recipient **4b;** the user device **2** transmits the area identification data and the donation recipient identification data to the server device **9,** where the server device **9** matches the area identification data and donation recipient identification data with the donation recipient management database section 58 of the server device **9,** so that the donation recipient **4b** can be authenticated.

When the face authentication section 45b is activated, the user device **2** captures an image by the image capturing section 17 to authenticate the face included in the captured image. This face authentication is executed by the user device **2** transmitting the feature data acquired from the facial image captured by the image capturing section 17 and by the server device **9** matching the facial feature data stored on the donation recipient management database section 58 of the server device **9** with the feature data acquired from the facial image captured by the image capturing section 17.

When the signal reading section 45c is activated, the user device **2** reads the beacon signal transmitted by the short-range wireless communication section 18 from the signal transmitting device 6 possessed by the donation recipient **4b.** This beacon signal is managed in the donation recipient management database section 58; the user device **2** can transmit the identification data included in the beacon signal to the server device **9,** and the server device **9** can specify the donation recipient based on the identification data included in the beacon signal.

When the list display section 45d is activated, the user device **2** acquires the list data of the donation recipients **4b** currently present in the first predetermined area **4a** from the donation recipient management database section 58 of the server device **9,** and executes the processing to allow the user to select any donation recipient while displaying the list data.

Regardless of which method specifies the donation recipient, the server device **9** manages the stay status of the donation recipient **4b** by a stay status management section 57, and updates the stay status in a donation recipient management database section 58. Thus, if a donation recipient **4b** that is not present in the predetermined area is designated, it will be processed as an error.

When the recipient is specified in this way, the number-of-points determining section 46 accepts the determination of the number of points that the user wishes to donate to the donation recipient. At this stage, if points are provided as they are, the processing proceeds to the next just by the determination of the number of points; however, if a donated matter (e.g., a product, virtual currency) corresponding to the number of points is to be donated, the donated matter determining section 46a is activated.

The donated matter determining section 46a displays a list of products/services and virtual currency that are selectable as the donated matter, together with the number of points required, and allows the user to select which donated matter, and how many of it, to donate. At this stage, the selectable products/services are specified with reference to the product service database section 55, and they may be products/services provided in the first predetermined area **4a** or products/services provided in any predetermined area other than the first predetermined area **4a.** In addition, the virtual currency may be, for example, predetermined one type of virtual currency that can be already handled by the user program **13a** (i.e., user non-selection system) or virtual currency selected by the user from a plurality of virtual currencies that can be handled (i.e., user selection system).

The donated matter determining section 46a refers to the point distribution setting in the facility management database section **51** to allow selecting of only the donated matters that can be purchased with the number of points to be distributed to the donation recipient out of the number of points that the user intends to donate. At this stage, while donated matters that are not selectable may be configured not to be displayed in the selectable list display, the required number of points (the number of points that the user must pay after taking into account the distribution ratio for the donation recipient) may be configured to be displayed, where the number of points to be donated may be increased so that such donated matters can be selected.

If the number of points to be donated (including the donated matter) is determined by the user, but the number of points entered as the points to be donated is larger than the number of points owned by the user, processing by the insufficient-point-time processing section 48 is executed. At this stage, the number-of-points determining section 46, which confirms the points owned by the user, functions as an owned-value-and-point reference means.

The insufficient-point-time processing section 48 displays point-gain required time, which is the time required to save up the number of points necessary, and then allows the user to select whether to stop donating points since the points are insufficient, to make a reservation for donating points after the necessary points have been saved up, or to donate points by purchasing points. At this stage, the insufficient-point-time processing section 48 for displaying the point-gain required time functions as a point-acquisition-required-time notification means.

In the case of the reservation for donating points (including donation of a donated matter) after the points have been saved up, the user device **2** waits until the necessary points are saved up, and at the time when the necessary points are saved up, the point donation execution section 47 (value point donating means) is activated. In the case of purchasing points, the point donation execution section 47 is activated at the time when the necessary points are saved up by purchasing points.

In the case of the reservation for donating points at the time when the necessary points are saved up, where although the necessary points have been accumulated, the necessary points have not been accumulated because the user existed (stayed) in the first predetermined area **4a** until the point-gain required time, but the necessary points have been accumulated due to other factors, the insufficient-point-time processing section 48 displays an execution propriety selection button for selecting whether or not to execute the point donation, and allows the user to select whether or not to execute it. This allows to prevent the reservation content from being executed at an unexpected timing and the points being donated. If the necessary points are accumulated due to other factors, the point donation may not be executed. In this way, the insufficient-point-time processing section 48, which determines execution propriety or determines not to execute the point donation when the necessary points are accumulated due to other factors, functions as an execution propriety determining means.

The point donation execution section 47 transmits point donation data, indicating who (which user) is to donate, how many points to donate, to which donation recipient the user donates, and in which area the donation recipient is present, to the server device **9.** The server device **9** receives an instruction for point donation from the point donation receiving section 61.

When points are donated as they are, the processing of updating and recording is performed on the area point management database section 64 (and/or the user point management database section **53** and/or the donation recipient management database section 58), with the donated points, by the point donation processing section 62. Upon the point updating, the server device **9** distributes the points to be donated to the business operator and the donation recipient in the predetermined area according to predetermined point-donation rules (point distribution setting) in the predetermined area. Depending on the point-donation rules, it is also possible to donate all the points to either the business operator or the donation recipient in the predetermined area. The number of points owned by the business operator that manages the donation recipient may be stored, for example, on the area point management database section 64 or the donation recipient management database section 58.

When a donated matter is donated, the donated matter purchase-and-delivery processing section 65 executes the processing of purchasing a donated matter with points and delivering the donated matter to the donation recipient. When the donated matter is a product, the donated matter purchase-and-delivery processing section 65 performs the processing of purchasing the product and shipping arrangement to the delivery address registered in advance by the donation recipient. When the donated matter is a service, the donated matter purchase-and-delivery processing section 65 performs the processing of sending a ticket to receive the service to the delivery address or the processing of transmitting the ticket to receive the service to the delivery destination email address. When the donated matter is virtual currency, the donated matter purchase-and-delivery processing section 65 accesses to the exchange of the virtual currency to perform the purchase processing for the virtual currency, and performs the transfer processing for virtual currency, which transfers the purchased virtual currency to the donation recipient.

The point donation processing section 62 also subtracts the number of points donated from the user point management database section **53.** The history of point donation (including the donation of donated matter) is thus recorded in the history database section 66 of the server device **9.**

When the point donation is executed, the return processing by the return processing section 67 is performed as necessary. This return processing includes, for example, giving a gift-in-return as a present, giving a discount ticket, giving an item not for sale, etc., as an incentive for point giving. Any mode may be applied as the mode of returning; for example, one gift-in-return (including a data and service ticket) may be given to the user when the point donation is performed once, one gift-in-return may be given when the number of points given by one point giving is greater than or equal to a predetermined number of points, or the gift-in-return may be set in advance for each stage as to which gift-in-return is given for a certain number of points or more, and the gift-in-return may be determined and given in accordance with the stage to which the number of points given at the one point giving corresponds. This return processing differs from product purchasing; thus, even if the point giving with the number of points that exceeds the number of points necessary to receive the gift-in-return is performed, the point giving including the excess amount is performed, where the gift-in-return to be obtained is given without returning the change as in the case of purchasing the product.

The notification section 63 notifies the donation recipient that the point donation has been performed in this way. This notification is achieved by transmitting donation notification data to the user program **13a** (or donation recipient program) installed on the user device **2** possessed by the donation recipient. The user device **2** emits a notification sound (or vibrates) in the notification section (speaker) (not shown) using the user program **13a** (or donation recipient program), and displays a receipt message (e.g., "You have received a donated matter from Mr. OO") on the display section 15, where upon execution of an operation to see details by the donation recipient, it shows how many points were given by whom and when, and what was given if the donation was a donated matter.

When the history confirmation section 49 is activated, the user device **2** accesses the history database section 66 of the server device **9** and displays the history of gaining and usage of the user's points in chronological order.

The area management database section **51,** user point management database section **53,** product service database section 55, donation recipient management database section 58, area point management database section 64, and history database section 66, stored by the server device **9,** manage the data described below, respectively.

The area management database section **51** stores: an area ID; an identification ID of a signal transmitting device 6 in an area and an installation location thereof; a particular area to perform point giving; point giving required time indicating how long it takes for the point giving to be performed in a particular area; point distribution setting that indicates the ratio of the points donated to the donation recipient to be distributed between the donation recipient and the business operator that manages the donation recipient when points are donated to the donation recipient; and information about an area (e.g., area name, address, contact information, etc.). The particular area included in the area management database section **51** functions as particular area managing data; the particular area and the point giving required time function as point giving condition managing data; and the point distribution setting functions as point handling setting data.

The user point management database section **53** stores: a device ID of the user device **2** operated by the user; a user ID that identifies the user; a password set by the user; personal information of the user (e.g., full name, address, phone number, e-mail address, etc.); the number of points owned, which is the total number of points owned by the user, etc.

The product service database section 55 stores: an area ID for identifying the area; a product/service ID for identifying a product or service that is set and registered for each area; the name of the product/service; the amount of money for the product/service; point-purchasing propriety setting for the product/service; the number of points necessary to purchase the product/service, etc.

The donation recipient management database section 58 stores: an area ID; a donation recipient ID of a donation recipient that is set and registered for each area; a QR code^{®} of a donation recipient; a feature data for face authentication of a donation recipient; an identification data of the signal transmitting device possessed by a recipient; points owned by a donation recipient; a stay status of a donation recipient; personal information of the donation recipient (e.g., donation recipient's full name, age, gender, affiliation, rank, donation point gaining rate, etc.); information about the business operator that manages the donation recipient (e.g., the name and address of the business operator), etc. The ratio of distribution of the donated points between the donation recipient and the business operator that manages the donation recipient may be set to vary in accordance with the rank. In addition, if the points to be donated are preset for each donation recipient, the donation recipient management database section 58 may further store the points to be donated.

The history database section 66 records the history of point giving, point usage, and point donating as data. Specifically, recorded therein are: classification of point giving/usage/donating; a point payer ID of the point payer who paid points as well as a point recipient ID of the point recipient who received the points due to the point usage, giving or donating; the number of points used, given or donated; year, month, day and time when the point was used, given, or donated, etc.

According to the embodiment shown in Figure 10, the location acquisition section 32, area determination section 33, point-gaining condition acquisition section 34, time measurement section 35, point giving processing section 36, product service purchase and sell processing section 44, donation recipient determining section 45, number-of-points determining section 46, point donation execution section 47, and insufficient-point-time processing section 48 are illustrated as constituent elements of the user device **2;** however, the present invention is not limited thereto. For example, the server device **9** may also comprise constituent elements that correspond to these constituent elements of the user device **2,** respectively, where they may be configured to allow executing of authentication on the server device **9.** This allows to prevent the user program **13a** of the user device **2** from being tampered with and illegally gaining points and donating points.

Note that, in the embodiment shown in Figure **10****,** any mode may be applied as the mode of each database section. For example, the area management database section **51,** user point management database section **53,** product service database section **55,** donation recipient management database section **58,** area point management database section **64,** and history database section 66 may be configured as a single external hard disk device for the server device **9** or as a storage on the cloud connected via a network. Alternatively, it is also possible for the area management database section **51,** user point management database section **53,** product service database section **55,** donation recipient management database section **58,** area point management database section **64,** and history database section 66 to be provided inside the server device **9.** The configuration of the database section **340** is not limited to a particular hardware configuration. For example, the area management database section **51,** user point management database section **53,** product service database section **55,** donation recipient management database section **58,** area point management database section **64,** and history database section **66** may be composed of a single hardware component or a plurality of hardware components.

According to the embodiments described above, an example has been described in which points are given to a user after a predetermined time has passed since the user stayed in the first predetermined area; however, the present invention is not limited thereto. For example, the points may be given according to the purchase and/or rental of the product/service, or may be given to the user at the time when the user enters the first predetermined area, or may be given to the user at the time when the user enters the first predetermined area, but may be decremented over a predetermined period of time. This makes it possible to implement the point service of the present invention even in an area where short-term use is preferable to long-term use, or in an area where users are prompted to exit in a short time to seek increase in sales by improving the turnover rate.

Further, according to the embodiments described above, the giving and donating of points have been described; however, the present invention is not limited thereto. What is given and donated may be some matter of value equivalent to the point (such as real amount of money, electronic money and virtual currency).

Further, according to the embodiments described above, an example has been described in which a QR code^{®} is read to specify the service provider; however, the present invention is not limited thereto. The code read to specify the service provider may be any code. For example, the code may be a one-dimensional code (e.g., bar code) or a two-dimensional code (e.g., QR code^{®}).

### 2.3 Processing by the Server Device

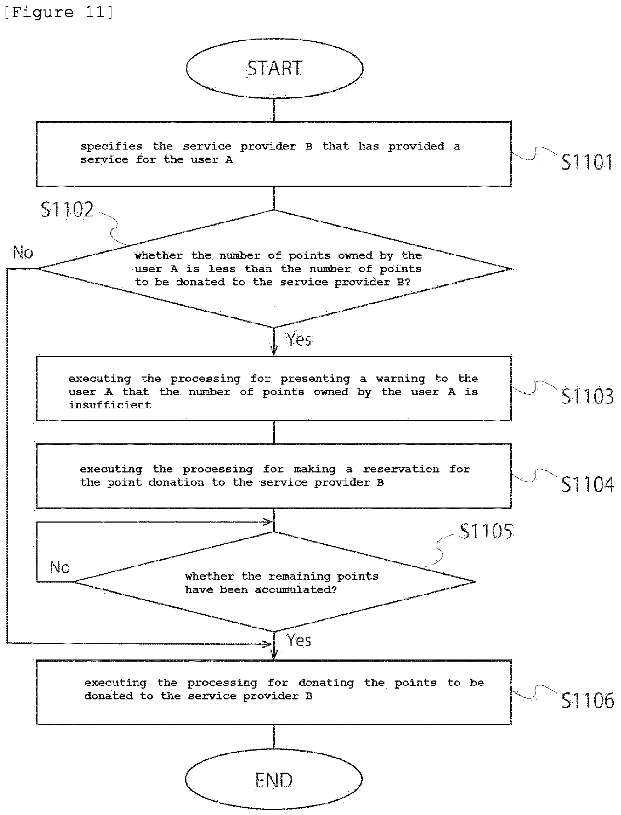

Figure **11** shows an example of the flow of processing executed on the server device **9.** Note that the steps shown in Figure **11** are executed by the processor section **22** of the server device **9.** The steps shown in Figure **11** will be described hereinafter.

Step S1101: The service provider **B** that has provided a service for the user **A** and the points to be donated to the service provider **B** are specified. This processing corresponds to, for example, the processing described with reference to the screen **830,** screen **840** and screen **850** shown in Figure **8C** to Figure **8E****.**

The service provider **B** is specified, for example, by authentication by reading the code, face authentication, authentication by a signal transmitting device, or a selection from a list. Since examples of these specific processing have been described with reference to the donation recipient determining section **45,** the QR reading section **45a,** the face authentication section **45b,** the signal reading section **45c,** and the list display section **45d,** detailed description thereof will be omitted here. The points to be donated may be, for example, such points that are specified by receiving data indicating the points to be donated from the user device **2** or predetermined points to be donated for each donation recipient that are specified with reference to the donation recipient management database section 58. Note that the points to be donated are at least some of the points owned by the user **A.**

Step S1102: It is determined whether the number of points owned by the user **A** is less than the number of points to be donated to the service provider **B.** This determination processing may be executed by referring to the user point management database section **53.** The points owned by the user **A** stored on the user point management database section **53** may be points given according to the stay duration for which the user has stayed in a predetermined area, points given according to the purchase and/or rental of a product/service (such as, T points, d points and Rakuten points), or a combination thereof. If the determination result is "Yes", the processing proceeds to Step S1103, and if the determination result is "No", the processing proceeds to Step S1106.

Step S1103: The processing is executed for presenting a warning to the user **A** that the number of points owned by the user **A** is insufficient. Examples of this processing include, without limitation, displaying a warning that the number of points owned by the user **A** is insufficient, on the user device **2.** This processing corresponds to, for example, the processing that has been described with reference to the image **870** shown in Figure **8G****.**

Step S1104: The processing for making a reservation for the point donation to the service provider **B** is executed so that points to be donated to the service provider **B** can be donated to the service provider **B** at the time when the remaining points Z, required for the number of points owned by the user **A** to exceed the number of points to be donated to the service provider **B,** are accumulated. This allows to automatically execute the donation of points to the service provider **B** in accordance with the reservation when the remaining points Z, required for the number of points owned by the user **A** to exceed the number of points to be donated to the service provider **B,** are accumulated. The processing of Step S1104 may be executed, for example, in response to the reservation button **873** shown in Figure **8G** being selected by the user **A.** That is, Step S1104 is omitted if the OK button **872** shown in Figure **8G** is selected by the user **A.**

Step S1105: It is determined whether the remaining points Z, required for the number of points owned by the user **A** to exceed the number of points to be donated to the service provider **B,** have been accumulated. The remaining points Z may be accumulated by applying the points given according to the stay duration for which the user has stayed in a predetermined area, or by applying the points given in response to the user **A** purchasing and/or renting a product/service.

Step S1106: The processing for donating the points to be donated to the service provider **B,** from the user **A** to the service provider **B,** is executed. This processing is executed, for example, by referring to the user point management database section **53** and the donation recipient management database section 58. If the point donation to the service provider **B** is reserved in Step S1104, this processing is executed according to the reservation.

The processing in Step S1106 includes, for example, processing of updating the points owned by the user **A** stored on the user point management database section **53,** and the points owned by the service provider **B** stored on the donation recipient management database section 58, based on the points to be donated to the service provider **B.** More specifically, the processing in Step S1106 may include: reducing the points owned by the user **A,** stored on the user point management database section **53,** by the points to be donated to the service provider **B;** and increasing the points owned by the service provider **B,** stored on the donation recipient management database section 58, by the points to be donated to the service provider **B.**

For example, when the points given according to the stay duration of the user **A** in a first predetermined area, among a plurality of predetermined areas, are applied to the remaining points Z, the processor section **23** of the server device **9** may be configured to further execute:
calculating the time required to accumulate the remaining points Z;
notifying the user **A** of the time required to accumulate the remaining points Z (e.g., the transmission to the user device **2** of the user **A);**
determining whether the user **A** has stayed in the first predetermined area for the time required to accumulate the remaining points Z; and
upon determining that the user **A** has stayed in the first predetermined area for the time required to accumulate the remaining points Z, executing the processing for donating the points to be donated to the service provider **B,** including the remaining points Z, to the service provider **B.**

For example, when the points given in response to the user **A** purchasing and/or renting a product/service are applied, the processor section **23** of the server device **9** may be configured to further execute:
determining whether the cumulative value of the points given in response to the user **A** purchasing and/or renting the product/service every time the user **A** purchases and/or rents the product/service, has exceeded the remaining points Z; and
upon determining that the cumulative value of the points given in response to the user **A** purchasing and/or renting the product/service has exceeded the remaining points Z, executing the processing for donating the points to be donated to the service provider **B,** including the remaining points Z, to the service provider **B.**

At any timing after Step S1101 and before Step S1106, the processor section **23** of the server device **9** may specify the business operator that manages the service provider **B;** and execute the processing for donating the points to be donated (at least some of the points owned by the user **A)** to the specified business operator. The processing of specifying the business operator is executed, for example, by referring to the donation recipient database section 58. The processing for donating the points to be donated (at least some of the points owned by the user **A)** to the specified business operator is executed, for example, by referring to the area management database section **51** and the user point management database section **53.** In this case, the processor section **23** of the server device **9** may execute the point donation to the service provider **B** and the business operator according to predetermined rules that regulate the distribution of points to the service providers and business operators.

### 3. Cast Matching Service

The Applicant proposes a new matching service with a cast (e.g., a hostess in a hostess bar) . This is intended to allow conversations not only with a cast whose phone number is known, but also a cast whose phone number etc. is unknown, without going to a store (e.g., a hostess bar). According to this new matching service, a user can search for, and make a call to, a cast that the user has never met. In addition, after making a call, the user can go to the store where the cast serves, and even if it is the user's first visit, the user can be guided by the cast that the user has called, which makes the user feel at ease.

### 3.1 Screen displayed on the User Device

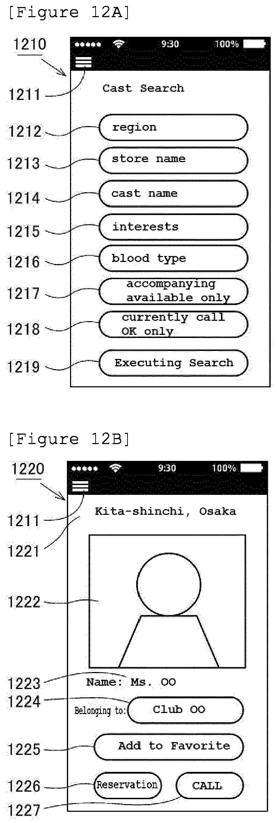

Figure **12A** to Figure **12C** each show an example of the screen displayed on the user device. The screens shown in Figure **12A** to Figure **12C** are screens displayed on the user device operated by the party that donates points (the user **A)** .

Figure **12A** shows an example of a screen **1210** for searching for a cast (i.e., the service provider).

According to the embodiment shown in Figure **12A****,** the screen **1210** includes: a menu button **1211** for calling various functions; a region designation section **1212** for designating a region name as a search condition; a store name designation section **1213** for designating the name of the store to which the cast belongs as a search condition; a cast name designation section **1214** for designating the name of the cast (e.g., a hostess in a hostess bar) as a search condition; an interest designation section **1215** for designating interests as a search condition; a blood type designation section **1216** for designating the blood type of the cast as a search condition; an accompanying availability designation section **1217** for designating whether or not the accompanying by the cast is available as a search condition; a call OK designation section **1218** for designating the current call status of the cast as a search condition; and a search execution button **1219** for executing the search of the cast based on the entered search conditions.

When the user selects the region designation section **1212,** the user can then enter the name of the region (e.g., Tokyo or Osaka). This can designate the entered name of the region as a search condition, and the information about the cast associated with the entered name of the region (e.g., the cast working in the entered region, or the cast from the entered region) may be presented to the user as a search result.

When the user selects the store name designation section **1213,** the user can then enter the name of the store to which the cast belongs. This can designate the entered name of the store as a search condition, and the information about the cast that belongs to the entered name of the store may be presented to the user as a search result. It may also be possible to enter the name of the business operator that manages the cast, in addition to the name of the store to which the cast belongs, or instead of the name of the store to which the cast belongs. The name entered in response to the selection of the store name designation section **1213** does not have to be a complete name (i.e., full name), and a cast of the store (or business operator) with a name that partially matches the entered content may be presented to the user as a search result.

When the user selects the cast name designation section **1214,** the user can then enter the name of the cast. This can designate the entered name of the cast as a search condition, and the information about the cast of the entered name may be presented to the user as a search result. The name entered in response to the selection of the cast name designation section **1214** does not have to be a complete name (i.e., full name), and a cast with a name that partially matches the entered content may be presented to the user as a search result.

When the user selects the interest designation section **1215,** the user can then enter the interests of the cast (e.g., likes talking, likes liquor). This can present information about the cast associated with the entered interests as a search result.

When the user selects the blood type designation section **1216,** the user can then enter the cast's blood type (e.g., type A, B, O or AB). This can present information about the cast associated with the entered blood type as a search result.

When the user selects the accompanying availability designation section **1217,** the user can then select to present only the casts that are available for the accompanying as a search result, or casts regardless of whether or not they are available for the accompanying as a search result. This allows the user to set "only the casts available for accompanying" as a search condition so that only such casts available for accompanying can be presented as a search result.

When the user selects the call OK designation section **1218,** the user can then select to present only the casts that are in a call standby state and are not in a call (i.e., casts that can answer by calling) as a search result or casts regardless of their current call status as a search result. This allows the user to set "casts that are in a call standby state and are not in a call" as a search condition so that only such casts that are in a call standby state and are not in a call can be presented as a search result.

When the user selects the search execution button **1219,** the user can view the search result of the cast executed based on the search condition set by selecting at least one of the region designation section **1212** or the call OK designation section **1218.**

As to the item that was not entered in the region designation section **1212** or the call OK designation section **1218,** the processing is executed in such a manner not to perform the narrowing-down by that item (i.e., there is no search condition setting for that item).

When the search is executed, a screen (not shown) showing a cast that at least partially satisfies the search conditions may be displayed on the user device. When there are multiple casts that satisfy the search conditions at least partially, a screen may be displayed that displays a list of the casts that satisfy the search conditions at least partially. Casts that satisfy all the search conditions may be displayed at the upper part of the screen as the highest priority cast, while casts that satisfy only some of the search conditions may be displayed at the lower part of the screen as casts with lower priority as the number of satisfied conditions decreases. The presenting of the cast that satisfies the search conditions at least partially as the search result makes it possible to reduce the possibilities that no cast is applicable at all (i.e., zero) as a search result upon the searching.

Figure **12B** shows an example of a screen **1220** for displaying detailed information about the cast selected by the user among the casts satisfying the search conditions.

According to the embodiment shown in Figure **12B****,** the screen **1220** includes: a menu button **1211;** an affiliation place display section **1221** for displaying information about the place of the store to which the cast belongs; an image display section **1222** for displaying an image (e.g., a cast's face photo); a cast name display section **1223** for displaying the name of the cast; a store name display section **1224** for displaying the name of the store to which the cast belongs (or the business operator that manages the cast); a favorite addition button **1225** for registering a cast as a favorite; a reservation button **1226** for reserving a call to a cast by designating a date and time; and a CALL button **1227** for requesting a call to a device operated by the cast that the user wishes to call.

According to the embodiment shown in Figure **12B****,** "Kita-shinchi, Osaka" is displayed on the affiliation place display section **1221** as the place of the store to which the cast belongs. "Ms. OO" is displayed on the cast name display section **1223** as the name of the cast. "Club OO" is displayed on the store name display section **1224** as the name of the store to which the cast belongs.

Figure **12C** shows an example of a screen **1230** during a call with a cast.

According to the embodiment shown in Figure **12C****,** the screen **1230** includes: a menu button **1211;** a cast name display section **1231** for displaying the name of the cast in a call; a call duration display section **1232** for displaying the length of the time of the call; a point amount display section **1233** for displaying points donated by the user (i.e., social tipping); an image display section **1234** for displaying the image of a cast **1235;** a call end button **1236** for ending the call; a mute button **1237** for muting the voice from the user (i.e., the voice entered to the user device); and a point donation button **1238** for performing point donation for the cast (i.e., social tipping).

The amount of points that the user has donated to the cast in a call during the call, for example, is displayed in the point amount display section **1233.** Note that, in the point amount display section **1233,** any mode may be applied as the display mode of the amount of points donated by the user to the cast. For example, the amount of points donated by the user to the cast may be displayed with a heart mark (such as displaying about 10% of a heart mark by the donation of 10 points, and completing one full heart mark by the donation of 100 points), or may be displayed numerically using numbers.

While it is preferable that a real-time picture of the cast photographed by the photographing section of the device operated by the cast is displayed on the image display section **1234,** a still image (such as the icon used by the cast) may be displayed thereon.

When the user selects the point donation button **1238,** the user can donate points to the cast in the call. The point donation is executed from, for example, the points owned by the user. The point donation button **1238** can be selected at any timing during a call between the cast and the user. Note that any embodiments may be applied as the embodiment of point donation. For example, predetermined points (e.g., 10 points) may be donated each time the point donation button **1238** is selected, or the points to be donated may be increased more as the user slides his finger more while pressing the point donation button **1238** with his finger, and the number of points when the finger is released may be donated.

In this way, the cast is donated points by the user, and the points owned by the cast thus increase, which leads to further motivation of the cast. Furthermore, the cast may be given points according to the duration of the call with the user, which leads to further motivation of the cast. The points given according to the duration of the call with the user may vary according to the rank of the cast.

### 3.2 Other Configurations of the System to Achieve the Cast Matching Service

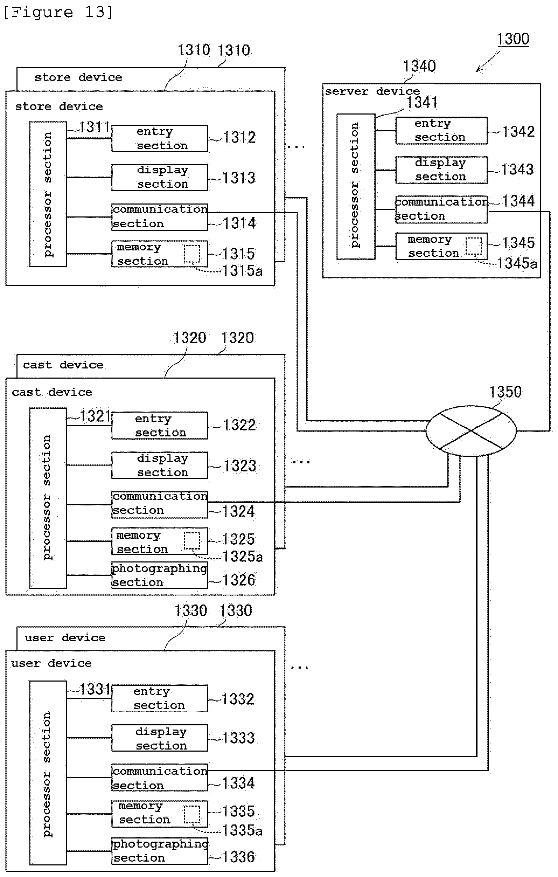

Figure **13** shows an example of other configurations of the system to achieve the cast matching service.

According to the embodiment shown in Figure **13****,** the computer system **1300** comprises: at least one store device **1310** located in each store; at least one cast device **1320** operated by the cast (service provider); at least one user device **1330** operated by the user; and a server device **1340.** According to the embodiment shown in Figure **13****,** the server device **1340** is configured to be communicable with at least one store device **1310,** at least one cast device **1320,** and at least one user device **1330,** via the Internet **505.**

According to the embodiment shown in Figure **13****,** the store device **1310** has: a processor section **1311;** an entry section **1312;** a display section **1313;** a communication section **1314;** and a memory section **1315** composed of a hard disk, nonvolatile memory etc. that stores data. The cast device **1320** has: a processor section **1321** for executing various operations and controls, having a CPU, ROM, and RAM; an entry section **1322;** a display section **1323;** a communication section **1324;** a memory section **1325** composed of a hard disk, nonvolatile memory etc. that stores data; and a photographing section **1326.** The user device **1330** has: a processor section **1331;** an entry section **1332;** a display section **1333;** a communication section **1334;** a memory section **1335** composed of a hard disk, nonvolatile memory etc. that stores data; and a photographing section **1336.** Note that the store device **1310,** the cast device **1320,** and the user device **1330** may be a mobile wireless terminal, such as a mobile phone, a smart phone, a tablet terminal, smart glasses or a smart watch terminal, or a personal computer, such as a desktop PC, a laptop PC or a notebook PC. The server device **1340** has: a processor section **1341;** an entry section **1342;** a display section **1343;** a communication section **1344;** and a memory section **1345** composed of a hard disk, nonvolatile memory etc. that stores data.

The processor section **1311** of the store device **1310** has a CPU, a ROM and a RAM, and executes various operations and controls of the store device **1310.** The same applies to the configuration of the processor section **1321,** the processor section **1331,** and the processor section **1341.**

The display section **1313** of the store device **1310** is configured with an appropriate display device, which may be, for example, a liquid crystal display or an organic EL display. The same applies to the configuration of the display section **1323,** the display section **1333,** and the display section **1343.**

The entry section **1314** of the store device **1310** is configured with an appropriate entering device, which may be, for example, a keyboard, a mouse, or a touch panel provided on top of the display section **1313.** The same applies to the configuration of the entry section **1324,** the entry section **1334,** and the entry section **1344.**

The memory section **1315** of the store device **1310** is composed of a storage means, such as a hard disk or a nonvolatile memory, and includes various data and various programs stored thereon. In addition, the memory section **1315** includes a store device program **1315a** stored thereon, and the store device program **1315a** is executed by the processor section **1311** of the store device **1310.** The memory section **1325** of the cast device **1320** is composed of a storage means, such as a hard disk or a nonvolatile memory, and includes various data and various programs stored thereon. In addition, the memory section **1325** includes a cast device program **1325a** stored thereon, and the cast device program **1325a** is executed by the processor section **1321** of the cast device **1320.** The memory section **1345** of the server device **1340** is composed of a storage means, such as a hard disk or a nonvolatile memory, and includes various data and various programs stored thereon. In addition, the memory section **1345** includes a server device program **1345a** stored thereon, and the server device program **1345a** is executed by the processor section **1341** of the server device **1340.**

The memory section **1335** of the user device **1330** is composed of a storage means, such as a hard disk or a nonvolatile memory, and includes various data and various programs stored thereon. In addition, the memory section **1335** includes a user device program **1335a** stored thereon, and the user device program **1335a** is executed by the processor section **1331** of the user device **1330.** The user device program **1335a** may be similar to the user program **13a,** which has been described with reference to Figure **9****,** and the memory section **1335** of the user device **1330** may further include the user data **13b** stored thereon, which has been described with reference to Figure **9****.** This allows the user device **1330** to exert working effects similar to those of the user device **2** shown in Figure **9****,** and therefore, the user operating the user device **1330** can, for example, receive point giving in accordance with the stay duration in a predetermined area, such as a store, similar to the embodiment shown in Figure **9****.**

The user device **1330** may further comprise the location information acquisition section **16** and the short-range wireless communication section **18,** which have been described with reference to Figure **9****,** and the store in which the store device **1310** is located may include a plurality of signal transmitting devices **6** located therein, which have been described with reference to Figure **9****.** In this way, similar to the embodiment shown in Figure **9****,** the user device **1330** can communicate with the signal transmitting device **6** to execute the processing for measuring stay duration in a predetermined area, such as a store (such as the processing of transmitting the identification signal included in the beacon signal to the server device **9** or the processing of measuring stay duration in a predetermined area).

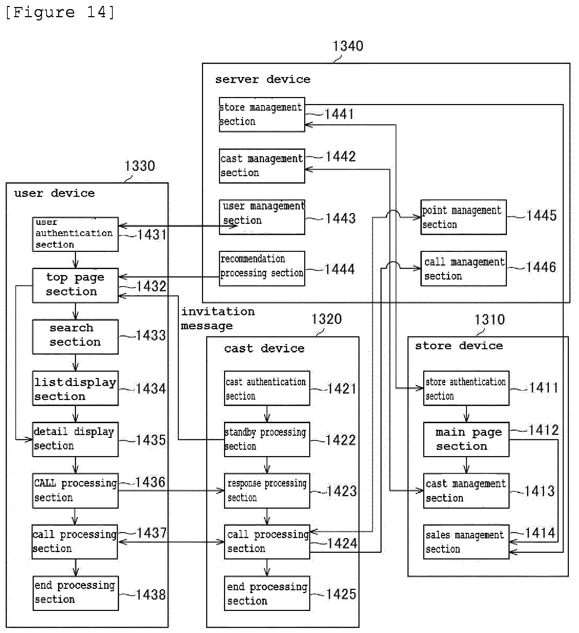

Figure **14** is a functional block diagram showing the main parts of the function of the processor section **1311** of the store device **1310** to work with the store device program **1315a,** the function of the processor section **1321** of the cast device **1320** to work with the cast device program **1325a,** the function of the processor section **1331** of the user device **1330** to work with the user device program **1335a,** and the function of the processor section **1341** of the server device **1340** to work with the server device program **1345a.**

The processor section **1341** of the server device **1340** comprises: a store management section **1441** for managing information about the store (and/or information about the business operator that manages the casts that belong to the store); a cast management section **1442** for managing information about the cast (donation recipient); a user management section **1443** for managing information about the user; a recommendation processing section **1444** for searching for a recommended cast upon the user activating the user device program **1335a,** and transmitting information about the recommended cast to the user device **1330;** a point management section **1445** for managing point data; and a call management section **1446** for managing call data.

The information about the store managed by store management section **1441** can be identified by the store ID for identifying the store, including the store name, address, phone number, e-mail address, website address, point reduction rate to the cast, store image (such as an exterior image of the store), etc. The point reduction rate to the cast indicates the rate of points given to the cast out of the points donated from the user and the income (cash or points) gained according to the call duration, and the point reduction rate can be freely set for each store by the business operator. This allows the store or business operator to devise strategies for gaining casts, etc.

The information about the cast managed by the cast management section **1442** can be identified by the cast ID for identifying the cast. The information is associated with the store ID of the store to which the cast belongs and includes the cast name, phone number, e-mail address, referral website address, accompanying availability, interests, blood type, call availability state, image, owned points, rank, etc. The "call availability state" in which the cast has set that a call is acceptable using the cast device **1320** and the cast is not currently talking to any user, is "call available", whereas the "call availability state" in which the cast has set that no call is acceptable using the cast device **1320** is "call not available". The "call availability state" in which the cast is talking to the user, is "in call". The rank is the rank of the cast evaluated by the store or the business operator, and can be set voluntarily for each store. For example, the point reduction rate to the cast may be increased as the rank goes up further. Alternatively, for example, the weighting of the points given may be increased as the rank goes up further. This makes it possible to improve the motivation of the cast.

The information about the user managed by the user management section **1443** can be identified by the user ID for identifying the user, and includes the user's name, address, telephone number, e-mail address, payment data, points owned, etc.

The point data managed by the point management section **1445** can be identified by the point ID for identifying the point, and is associated with the user ID for identifying the user who has donated points, the cast ID for identifying the cast who has been donated the points, and the store ID for identifying the store to which the cast who has been donated the points belongs. The point data includes date and time the points were donated, the number of points donated, etc. This allows the server device **1340** to manage when, at which store, and to which cast points were donated, which user donated the points, and how many points the user donated. In the point management section 1445, information indicating the correspondence relation between the call duration and the points (such as 1 point every 1 minute, 1 point every 5 minutes and 3 points every 10 minutes) may be further managed.

The call data managed by the call management section **1446** can be identified by the call ID for identifying the call, and is associated with the user ID for identifying the user of the call, the cast ID for identifying the cast of the call, and a store ID for identifying the store to which the cast of the call belongs. The call data includes date and time the call started, date and time the call ended, etc. This allows the server device **1340** to manage the cast of the call, the store to which the cast belongs, the user of the call, the time at which the call started and the time at which the call ended, and based on the duration of the call, appropriately execute the processing of charging the user (e.g., processing of reducing the points owned by the user), the processing of paying the cast (e.g., processing of increasing the points owned by the cast) and/or the processing of paying the store and/or business operator (e.g., processing of increasing the points owned by the store or business operator). The call management section **1446** may be allowed to execute the measurement of call duration.

Note that the information managed by each of the store management section **1441,** cast management section **1442,** user management section **1443,** point management section **1445** and call management section **1446** may be stored on the database section that is connected to the server device **1340.**

When the store device program **1445a** is activated on the store device **1310,** the processor section **1311** of the store device **1310** activates the store authentication section **1411** to execute store authentication by having the user to enter, for example, a store ID and a password. The processor section **1311** of the store device **1310** displays the main page by the main page section **1412** when the store authentication is OK, and executes registering, changing and deleting of the cast, calculating points, and calculating rewards according to calls, by the cast management section **1413.**

The processor section **1311** of the store device **1310** manages all sales amount (e.g., sales amount according to the points and calls gained by all casts, and sales amount by operating the store) by the sales management section **1414.**

The processor section **1321** of the cast device **1320** activates the cast device program **1325a** and executes the authentication of the cast by the cast authentication section **1421,** for example by having the cast enter the cast ID and password.

The processor section **1321** of the cast device **1320** is put into a standby state by the standby processing section **1422** and waits until a call request from the user is received. Note that this standby processing section 1422 can transmit an invitation message (such as "I'm waiting now. If you have time, please call me.") from a cast to a user device of a user who made a call in the past, for example through an e-mail.

In addition, the standby processing section **1422** can transmit any of a first setting that allows the state of waiting to be recognized on the user device **1330** (waiting explicit mode), a second setting that does not allow to respond to a call request from a user, and a third setting that allows to respond to a call request from a user but the state of waiting is not allowed to be recognized on the user device **1330** (concealed waiting mode), so as to switch and use these settings.

In the case of the concealed waiting mode, the cast does not appear to be waiting on the user device **1330.** However, when a call request is made from the user device **1330** to the cast device **1320,** the cast device **1320** gives a call notification. In this case, if the cast answers the phone, the call is successful, and if the cast does not answer the phone, it appears to the user that the cast is absent. With this concealed waiting mode, the cast can choose not to answer the call, for example, when a call comes in from a user that the cast does not want to talk to, which can also provide an appearance where it is not unnatural even if the cast does not answer the phone, from the user's point of view. Specifically, if the cast does not answer the call even though the cast is clearly waiting, it will lead to user dissatisfaction. Thanks to the concealed waiting mode, however, the user dissatisfaction can be prevented even if the cast does not answer the phone.

Upon receiving a call request from the user, the processor section **1321** of the cast device **1320** notifies the incoming call by voice and/or vibration by the response processing section **1423,** and the pressing of a call button by the cast activates the call processing section **1424.**

The processor section **1321** of the cast device **1320** executes a call with the user (e.g., a video call) by the call processing section 1424. The call processing section **1424** can accept point donation (social tipping) from the user to the cast in this call, displaying the amount of points received on both the cast device **1320** and the user device **1330.** The call processing section **1424** also executes the management and measurement of the call duration.

When the call ends, the processor section **1321** of the cast device **1320** completes, by the end processing section **1425,** the billing to the user based on the call duration and the reward payment to the cast and the store, and the point payment (reward payment) to the cast and the store based on the points given from the user to the cast. Note that the call rewards and gained points may be paid to the store once, and some or all of the call rewards and gained points may be paid from the store to the cast with some matters of monetary value (e.g., points, cash) based on predetermined rules for each store.

The processor section **1331** of the user device **1330** activates the user device program **1335a,** having the user to enter a user ID and a password, to execute the user authentication by the user authentication section **1431.**

The processor section **1331** of the user device **1330** displays a top page, by the top page section **1432.** On the top page, recommended cast determined by the recommendation processing section **1444** of the server device **1340** may also be displayed.

When the button for searching for casts is selected on the top page, the processor section **1331** of the user device **1330** accepts the entry of search conditions by the search section **1433** and executes the search for the casts.

The processor section **1331** of the user device **1330** displays the search results (such as displaying a list) by the list display section **1434.**

When one cast is selected from the displayed search results, the processor section **1331** of the user device **1330** displays the detailed information of that cast by the detail display section **1435.**

For example, when the CALL button **1227** shown in Figure **12C** is pressed, the processor section **1331** of the user device **1330** executes the process for making a call to the selected cast (e.g., the process of sending a call request to the cast device operated by the selected cast) by the CALL processing section **1436.**

When the cast responds to the call request, the processor section **1331** of the user device **1330** executes the call to the cast (e.g., video call) by the call processing section 1437. During this call, the user can donate points to the cast.

When the call ends, the processor section **1331** of the user device **1330** performs clearing process based on the donated points and call duration, by the end processing section 1438.

According to the embodiment described with reference to Figure **12A** to Figure **14****,** examples have been described in which a call is made between a cast (service provider) and a user; however, the present invention is not limited thereto. The cast and the user may communicate and contact in any format. For example, the cast and the user may communicate in a videophone format that combines real-time video and audio, may communicate in a voice-only telephone format, or may communicate in a chat format.

Furthermore, according to the embodiment described with reference to Figure **12A** to Figure **14****,** a hostess in a hostess bar has been mentioned as an example of the cast; however, the present invention is not limited thereto. The cast may be, for example, a character in Disneyland or a musician in a concert.

### 3.3 Processing by the Server Device

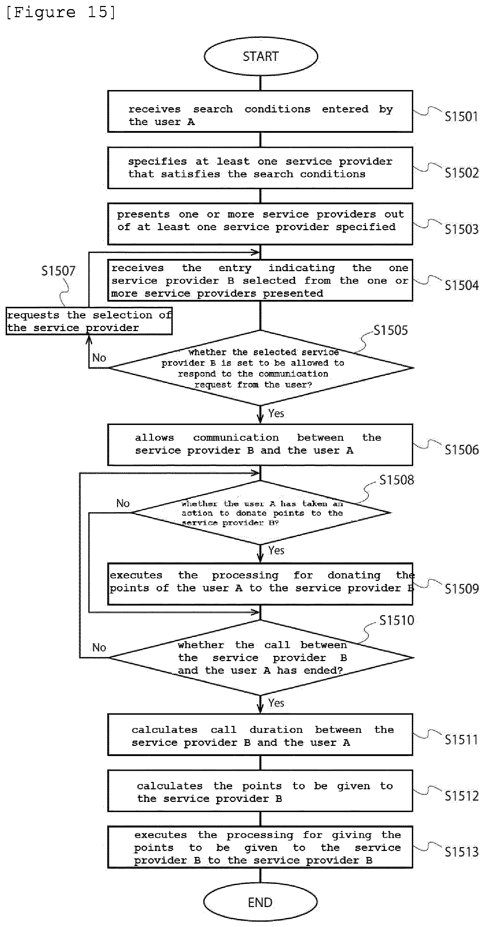

Figure **15** shows an example of the flow of processing executed on the server device **1340.** Note that the steps shown in Figure **15** are executed by the processor section **1341** of the server device **1340.** The steps shown in Figure 15 will be described hereinafter.

Step S1501: The search conditions entered by the user **A** are received. The search conditions entered by the user **A** are for specifying the service provider, and are received, for example, by the user device operated by the user **A.** An example of the search conditions entered by the user **A** is the search conditions entered on the screen **1210** shown in Figure **12A****.**

Step S1502: At least one service provider that satisfies the search conditions received in Step S1501 is specified. This process is executed, for example, based on the information about the service provider managed by the cast management section **1442** (e.g., name, accompanying availability, interests, blood type).

Step S1503: One or more service providers out of at least one service provider specified in Step S1502 is presented to the user **A** as a search result. This process is accomplished, for example, by transmitting the search result to the user device operated by the user **A** for display.

This allows the user **A** to select one service provider with whom the user wishes to communicate (e.g., call or chat) from among one or more service providers presented on the user device. Once one service provider is selected, detailed information about the selected service provider may be displayed on the user device, which corresponds to the screen **1220** shown in Figure **12B****.** For example, when the CALL button **1227** on the screen **1220** in Figure **12B** is selected, the user **A** transmits a communication request to the selected service provider, which transmits the entry for indicating one service provider selected from among the one or more service providers presented, from the user device to the server device **1340.** According to the embodiment shown in Figure **15****,** for convenience sake, it is assumed that the service provider **B** is selected from among the one or more service providers presented.

Step S1504: The entry is received indicating the service provider **B,** the one selected from the one or more service providers presented. Specifically, the communication request from the user **A** to the service provider **B** is received.

Step S1505: It is determined whether the selected service provider **B** is set to be allowed to respond to the communication request from the user. This processing is executed, for example, based on the information about the service provider managed by the cast management section **1442** (e.g., call availability state). If the determination result is "Yes", the processing proceeds to Step S1506, and if the determination result is "No", the processing proceeds to Step S1507.

Step S1506: The processing is executed to allow communication between the selected service provider **B** and the user **A.** This allows the user **A** to communicate with the service provider **B** (e.g., call or chat).

Step S1507: The processing of requesting the selection of the service provider is executed in order to have the user **A** to reselect the service provider from among the one or more service providers presented. The request for selecting the service provider may be transmitted to the user device operated by the user **A.**

Step S1508: It is determined whether the user **A** has taken an action to donate points to the service provider **B.** An example of the action to donate points to the service provider **B** is the selection of the point donation button 1238 on the screen **1230** shown in Figure **12C** by the user **A.** In this case, when the point donation button 1238 is selected, it is determined that the user **A** has taken the action to donate points to the service provider **B.** If the determination result is "Yes", the processing proceeds to Step S1509, and if the determination result is "No", the processing proceeds to Step S1510.

Step S1509: The process for donating the points owned by the user **A** to the service provider **B** is executed. This processing is executed, for example, based on the information about the user managed by the user management section **1443** (e.g., points owned) and the information about the service provider managed by the cast management section **1442** (e.g., points owned). This processing includes, for example, the processing of reducing the points owned by the user **A** and the processing of increasing the points owned by the service provider **B.** Here, the points owned by the user **A** may be points given according to the stay duration for which the user has stayed in a predetermined area, points given according to the purchase and/or rental of a product/service (such as, T points, d points and Rakuten points), or a combination thereof.

Note that the points donated to the service provider **B** in Step S1509 may be automatically donated to the business operator that manages the service provider **B.** In this case, for example, the business operator may aggregate points from all the service providers, including the service provider **B,** and distribute some or all of the aggregated points to the service provider **B** according to predetermined rules.

Step S1510: It is determined whether the call between the service provider **B** and the user **A** has ended. In this processing, for example, it is determined if the call end button **1236** on the screen **1230** shown in Figure **12C** is selected. If the call end button **1236** is selected, it can be determined that the call between the service provider **B** and the user **A** has ended. If the determination result is "Yes", the processing proceeds to Step S1511, and if the determination result is "No", the processing returns to Step S1508.

Step S1511: The call duration between the service provider **B** and the user **A** is calculated. This processing is executed, for example, based on the start time and end time of the call between the service provider **B** and the user **A.**

Step S1512: The points to be given to the service provider **B** are calculated based on at least the call duration between the service provider **B** and the user **A.** This processing is executed, for example, based on the information indicating the correspondence relation between the call duration and the points (such as 1 point every 1 minute, 1 point every 5 minutes and 3 points every 10 minutes) .

The points to be given to the service provider **B** may be calculated based on the call duration between the service provider **B** and the user **A** and the rank of the service provider **B** (e.g., the amount of weighting of the points given determined by the rank).

Step S1513: The processing is executed for giving the points to be given to the service provider **B** calculated in Step S1512 to the service provider **B.** This processing is executed, for example, based on the information about the service provider managed by the cast management section **1442** (e.g., points owned). This processing includes, for example, the processing of increasing the points owned by the service provider **B.**

According to the embodiment shown in Figure 15, an example has been described in which the processing for point donation is executed in Step S1509 in response to the user **A** taking the action for point donation in Step S1508; however, the present invention is not limited thereto. For example, in response to the user **A** taking the action for point donation in Step S1508, it may be allowed to execute processing for accumulating the number of points that the user **A** donates to the service provider **B** during this communication, and after the call between the service provider **B** and the user **A** ends, donating the accumulated points to be donated to the service provider **B** by the user **A,** from the user **A** to the service provider **B.**

According to the embodiments shown in Figure **5****,** Figure **6****,** Figure **7****,** Figure **11** and Figure **15****,** examples have been described in which the execution of the programs stored on the memory section by the processor section achieves the processing of the steps shown in Figure **5****,** Figure **6****,** Figure **7****,** Figure **11** and Figure **15****;** however, the present invention is not limited thereto. At least part of the processing of the steps shown in Figure **5****,** Figure **6****,** Figure **7****,** Figure **11** and Figure **15** may be achieved by a hardware configuration, such as a control circuit.

While the present invention has been illustrated with preferred embodiments of the present invention as above, the present invention should not be construed as being limited to these embodiments. It is understood that the present invention should be interpreted only by the scope of the claims of the present invention. It will be understood by those skilled in the art that from the description of specific preferred embodiments of the present invention, an equivalent range can be implemented based on the description of the present invention and common general technical knowledge.

### [Industrial Applicability]

The present invention is useful for providing a device, a program and a system for providing a point service capable of controlling the behavior of the user (and in particular, behavior that involves the movement of the user), and a device, a program, etc., for providing a point service with a tipping function.

### [Description of the Reference Numerals]

**300** computer system
**310** server device
**320₁-320_{N}** user device
**330₁₁-330_{1M}, 330₂₁-330_{2L}** terminal device
**340** database section
**350** Internet
1 computer system
2 user device
**9** server device
**1300** computer system
**1310** store device
**1320** cast device
**1330** user device
**1340** server device

## Claims

1. A device for providing a point service that adds value to time, the device comprising:
a means for acquiring first stay duration for which a user has stayed in a first predetermined area of a plurality of predetermined areas;
a point calculation means for calculating points to be given to the user based at least on the first stay duration; and
a means for giving the calculated points to the user.

2. The device according to claim 1, wherein the device further comprises:
a means for managing a total of the first stay duration within a predetermined period; and
a means for specifying a first point giving rate based at least on the total of the first stay duration within the predetermined period,
wherein the point calculation means calculates the points to be given to the user based at least on the first stay duration and the first point giving rate.

3. The device according to claim 1 or 2, wherein the device further comprises:
a means for managing a total of second stay duration for which the user has stayed in each of the plurality of predetermined areas within a predetermined period; and
a means for specifying a second point giving rate based at least on a total of the second stay duration within the predetermined period,
wherein the point calculation means calculates the points to be given to the user based at least on the first stay duration and the second point giving rate.

4. The device according to any one of claims 1-3,
wherein the device further comprises a means for acquiring congestion forecast information indicating a forecast of future congestion in the first predetermined area and/or congestion status information indicating a current congestion status in the first predetermined area, and
wherein the point calculation means calculates the points to be given to the user based at least on the first stay duration and the congestion forecast information and/or the congestion status information.

5. The device according to claim 1, wherein the device further comprises:
a means for managing information about a plurality of users and information about a plurality of business operators;
a point management means for managing points given to each user so as to invalidate the points given to each user that have passed a predetermined expiration date when the points pass the predetermined expiration date; and
a redistribution means for executing processing for redistributing the invalidated points to a particular user among the plurality of users or a particular business operator among the plurality of business operators.

6. The device according to claim 5,
wherein the device further comprises a means for managing a predetermined virtual currency owned by the plurality of users and/or the plurality of business operators, and
wherein the redistribution means executes processing for redistributing at least some of the invalidated points to a particular user among the plurality of users, based at least on the amount of a predetermined virtual currency owned by each of the plurality of users, and/or executes processing for redistributing at least some of the invalidated points to a particular business operator among the plurality of business operators, based at least on the amount of a predetermined virtual currency owned by each of the plurality of business operators.

7. The device according to claim 5 or 6,
wherein the device further comprises a means for managing a total of the first stay duration within a predetermined period, and
wherein the redistribution means executes processing for redistributing at least some of the invalidated points to the user based at least on the total of the first stay duration within the predetermined period.

8. The device according to any one of claims 5-7,
wherein the device further comprises a means for managing a total of second stay duration for which the user has stayed in the plurality of predetermined areas within a predetermined period, and
wherein the redistribution means executes processing for redistributing at least some of the invalidated points to the user based at least on the total of the second stay duration within the predetermined period.

9. The device according to any one of claims 5-8,
wherein the device further comprises a means of managing the frequency of use of points by the user, and
wherein the redistribution means executes processing for redistributing at least some of the invalidated points to the user based further on the frequency of use of the points by the user.

10. The device according to any one of claims 5-9, wherein the device further comprises:
a means for managing the points given to the user as to which predetermined area of the plurality of predetermined areas the user has stayed to cause the points to be given to the user; and
a point usage means for executing processing for using the points given to the user in any of the plurality of predetermined areas,
wherein the point usage means processes the points given to the user as points of higher value, when the points given to the user are such points that have been given to the user due to the user having stayed in the first predetermined area among the plurality of predetermined areas and when the user uses the points in the first predetermined area, compared to when the user uses the points in any area other than the first predetermined area.

11. The device according to any one of claims 1-10,
wherein the device further comprises a means for acquiring user location information indicating a location of the user, and
wherein the point calculation means calculates points to be given to the user based further on the user location information.

12. The device according to any one of claims 1-11, wherein the device further comprises:
a means for acquiring the user location information indicating the location of the user;
a means for acquiring user settlement information related to settlement of the user; and
a means for analyzing behavior of the user based at least on the user location information and the user settlement information.

13. The device according to any one of claims 1-12, wherein the device determines whether the first stay duration exceeds a predetermined threshold value, and
when the first stay duration exceeds the predetermined threshold value, executes processing for stopping giving points to the user or processing for disabling the user from using points.

14. The device according to any one of claims 1-13, wherein the device further comprises:
a means for managing the number of points owned by the user;
a means for specifying a service provider that has provided a service for the user; and
a first donation means for donating at least some of the points owned by the user to the service provider.

15. The device according to claim 13, further comprising:
a means for specifying a business operator that manages the service provider; and
a second donation means for donating at least some of the points owned by the user to the business operator,
wherein the points donated to the service provider and/or the business operator are donated according to a predetermined rule that regulates the distribution of points to service providers and business operators.

16. The device according to claim 14 or 15, further comprising:
a means for determining whether the number of points owned by the user is less than the number of points to be donated to the service provider; and
a means for making a reservation for donating points to the service provider when the number of points owned by the user is less than the number of points to be donated to the service provider, so that the points to be donated to the service provider can be donated to the service provider at the time when remaining points, required for the number of points owned by the user to exceed the number of points to be donated to the service provider, are accumulated.

17. The device according to claim 16, further comprising:
a means for calculating the time required to accumulate the remaining points; and
a means for notifying the user of the time required to accumulate the remaining points.

18. The device according to claim 17, further comprising:
a means for determining whether the user has stayed in the first predetermined area for the time required to accumulate the remaining points, wherein
when the user is determined to have stayed in the first predetermined area for the time required to accumulate the remaining points, the first donation means donates the points to be donated to the service provider, including the remaining points, to the service provider in accordance with the reservation for donating points to the service provider.

19. The device according to any one of claims 1-18, further comprising:
a means for receiving a search condition entered by the user;
a means for specifying at least one service provider that satisfies the search condition;
a means for presenting one or more service providers of the specified at least one service provider to the user as a search result;
a means for receiving an entry indicating one service provider selected from the presented one or more service providers; and
a means for permitting communication between the selected one service provider and the user.

20. The device according to claim 19, wherein the device further comprises a means for donating at least some of the points owned by the user to the selected one service provider.

21. The device according to claim 20, wherein the donating of at least some of the points owned by the user to the selected one service provider is allowed to be executed while the selected service provider and the user are in a call.

22. The device according to any one of claims 19-21, wherein the device further comprises:
a calculation means for calculating the points to be given to the selected one service provider, based at least on call duration between the selected one service provider and the user; and
a means for giving the points to be given to the selected one service provider to the selected one service provider.

23. The device according to claim 22, wherein the calculation means calculates the points to be given to the selected one service provider, based on the call duration between the selected one service provider and the user, and the rank of the selected one service provider.

24. A program executed on a device that adds value to time, the device comprising a processor section,
wherein the program, when executed by the processor section, causes the processor section to execute at least:
acquiring first stay duration for which a user has stayed in a first predetermined area of a plurality of predetermined areas;
calculating points to be given to the user based at least on the first stay duration; and
giving the calculated points to the user.

25. A system for providing a point service that adds value to time, the system comprising: at least one terminal device; and a device for providing a point service that adds value to time,
wherein the at least one terminal device comprises:
a means for specifying information about first stay duration for which a user has stayed in a first predetermined area of a plurality of predetermined areas; and
a means for transmitting the information about first stay duration to the device, and
wherein the device comprises:
a means for receiving the information about first stay duration from the at least one terminal device;
a means for acquiring the first stay duration from the information about first stay duration;
a means for calculating points to be given to the user based at least on the first stay duration; and
a means for giving the calculated points to the user.

26. A device for providing a point service, the device comprising:
a means for managing the number of points owned by a user;
a means for specifying a service provider that has provided a service for the user; and
a first donation means for donating at least some of the points owned by the user to the service provider.

27. The device according to claim 26, wherein the device further comprises:
a means for specifying a business operator that manages the service provider; and
a second donation means for donating at least some of the points owned by the user to the business operator, and
wherein the points donated to the service provider and/or the business operator are donated according to a predetermined rule that regulates the distribution of points to service providers and business operators.

28. The device according to claim 26 or 27, further comprising:
a means for determining whether the number of points owned by the user is less than the number of points to be donated to the service provider; and
a means for making a reservation for donating points to the service provider when the number of points owned by the user is less than the number of points to be donated to the service provider, so that the points to be donated to the service provider can be donated to the service provider at the time when remaining points, required for the number of points owned by the user to exceed the number of points to be donated to the service provider, are accumulated.

29. The device according to claim 28, wherein the points given to the user are given according to stay duration in a first predetermined area of a plurality of predetermined areas, and wherein the device further comprises:
a means for calculating the time required to accumulate the remaining points; and
a means for notifying the user of the time required to accumulate the remaining points.

30. The device according to claim 29, further comprising:
a means for determining whether the user has stayed in the first predetermined area for the time required to accumulate the remaining points, wherein
when the user is determined to have stayed in the first predetermined area for the time required to accumulate the remaining points, the first donation means donates the points to be donated to the service provider, including the remaining points, to the service provider in accordance with the reservation for donating points to the service provider.

31. A program executed on a device for providing a point service, the device comprising a processor section,
wherein the program, when executed by the processor section, causes the processor section to execute at least:
managing the number of points owned by a user;
specifying a service provider that has provided a service for the user; and
donating at least some of the points owned by the user to the service provider.

32. A system for providing a point service, the system comprises: at least one user device operated by a user; and a device for providing a point service,
wherein the user device comprises:
a means for acquiring information for identifying a service provider that has provided a service for the user; and
a means for providing the information for identifying the service provider for the device, and
wherein the device comprises:
a means for managing the number of points owned by the user;
a means for specifying the service provider based on the information for identifying the service provider; and
a first donation means for donating at least some of the points owned by the user to the service provider.

33. A device for providing a point service, the device comprising:
a means for receiving a search condition entered by a user;
a means for specifying at least one service provider that satisfies the search condition;
a presentation means for presenting one or more service providers of the specified at least one service provider to the user as a search result;
a means for receiving an entry indicating one service provider selected from the presented one or more service providers; and
a means for permitting communication between the selected one service provider and the user.

34. The device according to claim 33, wherein the device further comprises a means for donating at least some of the points owned by the user to the selected one service provider.

35. The device according to claim 34, wherein the donating of at least some of the points owned by the user to the selected one service provider is allowed to be executed while the selected service provider and the user are in a call.

36. The device according to any one of claims 33-35, wherein the device further comprises:
a calculation means for calculating the points to be given to the selected one service provider, based at least on call duration between the selected one service provider and the user; and
a means for giving the points to be given to the selected one service provider to the selected one service provider.

37. The device according to claim 36, wherein the calculation means calculates the points to be given to the selected one service provider, based on the call duration between the selected one service provider and the user, and the rank of the selected one service provider.

38. The device according to any one of claims 33-37, wherein the presentation means presents the one or more service providers set to be allowed to respond to a communication request from a user device, among the specified at least one service provider, to the user as a search result.

39. A program executed on a device for providing a point service, the device comprising a processor section,
wherein the program, when executed by the processor section, causes the processor section to execute at least:
receiving a search condition entered by a user;
specifying at least one service provider that satisfies the search condition;
presenting one or more service providers of the specified at least one service provider to the user as a search result;
receiving an entry indicating one service provider selected from the presented one or more service providers; and
permitting communication between the selected one service provider and the user.

40. A system for providing a point service, the system comprises: at least one user device operated by a user; and a device for providing a point service,
wherein the user device comprises:
a means for acquiring a search condition entered by the user; and
a means for transmitting the search condition to the device,
wherein the device comprises:
a means for receiving the search condition;
a means for specifying at least one service provider that satisfies the search condition; and
a presentation means for presenting one or more service providers of the specified at least one service provider to the user as a search result,
wherein the user device comprises a means for receiving and transmitting an entry indicating one service provider selected from the presented one or more service providers,
wherein the device comprises:
a means for receiving an entry indicating one service provider selected from the presented one or more service providers; and
a means for permitting communication between the selected one service provider and the user.

41. The system according to claim 40, wherein the device further comprises a means for donating at least some of the points owned by the user to the selected one service provider.

42. The system according to claim 41, wherein the donating of at least some of the points owned by the user to the selected one service provider is allowed to be executed while the selected service provider and the user are in a call.

43. The system according to any one of claims 40-42, wherein the device further comprises:
a calculation means for calculating the points to be given to the selected one service provider, based at least on call duration between the selected one service provider and the user; and
a means for giving the points to be given to the selected one service provider to the selected one service provider.

44. The system according to claim 43, wherein the calculation means calculates the points to be given to the selected one service provider, based on the call duration between the selected one service provider and the user, and the rank of the selected one service provider.

45. The system according to any one of claims 40-44, wherein the system further comprises a service provider device operated by a service provider,
wherein the service provider device comprises a means for transmitting a first setting, in which a response is allowed to a communication request from a user device, and a second setting, in which a response is not allowed to a communication request from a user device, to the device, and
wherein the presentation means presents the one or more service providers set to be allowed to respond to a communication request from a user device, among the specified at least one service provider, to the user as a search result.

46. The system according to claim 45, wherein the service provider device further comprises a means for transmitting a third setting, which conceals that a response is allowed to a communication request from a user device, to the device.
